# EUROPÄISCHE PATENTSCHRIFT

(11) **EP 3 471 002 B1**
(45) Veröffentlichungstag und Bekanntmachung des Hinweises auf die Patenterteilung: **23.02.2022**
(21) Anmeldenummer: 18200445.7
(22) Anmeldetag: 15.10.2018
(51) Int. Cl.: G06F 21/31

(54) **VERHALTENSBASIERTE AUTHENTIFIZIERUNG UNTER BERÜCKSICHTIGUNG VON UMWELTPARAMETERN**
BEHAVIOUR-BASED AUTHENTICATION TAKING INTO ACCOUNT ENVIRONMENTAL PARAMETERS
AUTHENTIFICATION À BASE DE COMPORTEMENTS EN FONCTION DES PARAMÈTRES ENVIRONNEMENTAUX

(30) Priorität: 16.10.2017 DE 102017218458
(43) Veröffentlichungstag der Anmeldung: 17.04.2019
(73) Patentinhaber: Bundesdruckerei GmbH, 10969 Berlin (DE)
(72) Erfinder: PAESCHKE, Dr. Manfred, 16348 Wandlitz (DE); SCHNJAKIN, Dr. Maxim, 10245 Berlin (DE)
(74) Vertreter: Richardt Patentanwälte PartG mbB

(56) Entgegenhaltungen:
- WO-A1-2011/001026
- WO-A1-2015/127256
- US-A1- 2011 016 534
- US-A1- 2014 289 833
- ADAM WÓJTOWICZ ET AL: "Model for adaptable context-based biometric authentication for mobile devices", PERSONAL AND UBIQUITOUS COMPUTING, SPRINGER VERLAG, LONDON, GB, Bd. 20, Nr. 2, 1. April 2016 (2016-04-01), Seiten 195-207, XP058081965, ISSN: 1617-4909, DOI: 10.1007/S00779-016-0905-0

## Beschreibung

Die Erfindung betrifft ein Verfahren und ein Kommunikationssystem zu einer Authentifizierung eines aktuellen Nutzers.

Mobile, tragbare Kommunikationssysteme sind fest im Alltag des Menschen integriert und nicht mehr wegzudenken. Um Zugriff auf ein solches System zu erlangen, muss sich ein Nutzer üblicherweise über eine persönliche Identifikationsnummer (PIN), ein Passwort oder gegebenenfalls einen Fingerabdruck authentifizieren. Angesichts der Vielzahl an PIN-gesicherten Geräten und Anwendungen, welche Nutzer alltäglich verwenden, und der damit verbundenen Vielzahl zu merkenden PINs kommt es leicht vor, dass ein Nutzer eine PIN vergisst.

Passwörter, die oftmals frei wählbar sind, können zu kurz und leicht zu merken sein. Dies kann jedoch den Nachteil haben, dass sie schneller zu erraten sind und somit nur ein geringes Maß an Sicherheit bieten. Passwörter, welche ein hohes Maß an Sicherheit bieten, sind demgegenüber oft lang und komplex, was es für den Nutzer schwierig machen kann sie sich zu merken. Fingerabdrucksensoren haben den Nachteil, dass der Nutzer extra einen vorbestimmten Finger auf diesem platzieren muss. Hält er das mobile, tragbare Kommunikationssystem in der falschen Hand kann der Fingerabdrucksensoren den Nutzer oftmals bereits nicht mehr erkennen. Ferner gibt es zahlreiche Situationen, in denen ein Fingerabdrucksensor nicht richtig funktioniert, wie etwa falls der Nutzer schmutzige oder feuchte Finger hat, ganz zu schweigen davon, wenn der Nutzer Handschuhe trägt.

Verfahren zur Nutzerauthentifizierung mittels eines Kommunikationssystems kommen überall dort zum Einsatz, wo die Identität des Nutzers überprüft wird, wobei der Identität eines registrierten Nutzers gewisse Rechte, insbesondere Zutritts- oder Zugriffsrechte, zugeordnet sind. Identität bezeichnet hier das Aufweisen von einer oder mehreren Eigenschaften, welche eine Person kennzeichnet und diese als Individuum von anderen Personen unterscheidet. Ferner bezeichnet Identität in einem weiter gefassten Sinne das Aufweisen von einer oder mehreren Eigenschaften, welche die Personen einer Gruppe gemeinsam haben und welche diese Personen als Angehörige der Gruppe von anderen Personen unterscheidet, welche nicht der Gruppe angehören. Stimmt die Identität des Nutzers mit der Identität eines registrierten Nutzers überein und besitzt dieser registrierte Nutzer die notwendigen Rechte, so wird ein Signal erzeugt, welches den Zugriff auf einen Speicherbereich frei gibt, ein bestimmtes Programm ausführt oder ähnliches. Um sich zu authentifizieren benötigt der Nutzer für einen solchen Prozess üblicherweise ein Passwort, eine PIN oder ein vergleichbares Authentifizierungsmittel. Ist ein unberechtigter Nutzer im Besitz der PIN, so hat der unberechtigte Nutzer vollen Zugriff auf das Kommunikationsgerät des eigentlichen Nutzers. Zum Erlangen eines solchen unberechtigten Zugriffs genügt es daher bereits, dass der unberechtigte Nutzer die PIN bei der Eingabe ausspäht und das Kommunikationssystem in seinen Besitz bringt.

Des Weiteren sind aus dem Stand der Technik Zugangskontrollen bekannt, bei denen sich ein Nutzer authentifizieren muss, um Zugriff auf ein Kommunikationssystem zu erlangen. Dabei muss sich der Nutzer mittels einer PIN oder einem Passwort authentifizieren. Diese Authentifizierungsfaktoren sind aber nicht nur leicht zu entwenden oder auszuspähen, sie haben noch einen weiteren Nachteil: Sie werden einem Nutzer einmal zugewiesen und erlauben es diesem sich jederzeit ohne Einschränkungen zu authentifizieren bzw. auf ein durch die Authentifizierungsanforderung geschütztes System oder einen Dienst zuzugreifen. Bei bekannten Authentifizierungsverfahren für den Zugriff auf ein Kommunikationssystem werden ferner aktuelle lokale Umweltparameter nicht berücksichtigt.

Die WO 2015/127256 A1 beschreibt ein Mobilgerät, welches eine fortlaufende Authentifizierung bei einer authentifizierenden Entität durchführt. Das Mobilgerät umfasst einen Satz von biometrischen und nicht biometrischen Sensoren und einen Prozessor. Der Prozessor ist dazu konfiguriert, Sensordaten von dem Satz von Sensoren zu empfangen, Authentifizierungsinformationen aus den empfangenen Sensordaten zu bilden und die Authentifizierungsinformationen kontinuierlich zu aktualisieren.

Die US 2011/016534 A1 beschreibt ein Verfahren und ein System zum impliziten Authentifizieren eines Nutzers zum Zugreifen auf kontrollierte Ressourcen. Das System empfängt eine Anforderung, auf die kontrollierten Ressourcen zuzugreifen. Das System bestimmt dann einen Nutzerverhaltenswert auf der Grundlage eines Nutzerverhaltensmodells und aktueller Kontextdaten über den Nutzer. Der Nutzerverhaltenswert erleichtert das Identifizieren eines Konsistenzlevels zwischen einem oder mehreren kürzlichen Nutzerereignissen und einem früheren Nutzerverhaltensmuster. Die aktuellen Kontextdaten, die mehrere Datenströme umfassen, werden von einem oder mehreren Nutzergeräten gesammelt, ohne den Nutzer aufzufordern, eine mit der Authentifizierung explizit verknüpfte Aktion auszuführen. Die Vielzahl von Datenströmen liefert eine Basis zum Bestimmen des Nutzerverhaltenswerts, jedoch liefert ein Datenstrom allein eine unzureichende Basis zum Bestimmen des Nutzerverhaltenswerts.

Die WO 2011/001026 A1 beschreibt ein Authentifizierungsverfahren, bei dem Verhaltensdaten über ein Telekommunikationsnetz gesammelt und verwendet werden, um Benutzer des Telekommunikationsnetzes zu authentifizieren.

Die Veröffentlichung "Model for adaptable context-based biometric authentication for mobile devices" von Adam Wöjtowicz et al. in Personal and ubiquitous computing, Springer Verlag, London, GB, Bd. 20, Nr. 2, 1. April 2016, Seiten 195-207, beschreibt ein kontextbasiertes biometrisches Authentifizierungsmodell für mobile Geräte, welches eine Ermittlung eines für den Moment genauesten Authentifizierungsverfahrens sowie einer genaueste Art von Interaktion mit einem Benutzer im Hinblick auf den Authentifizierungsprozess ermöglicht.

Die US 2014/0289833 A1 beschreibt ein System, eine Vorrichtung, ein Verfahren und ein maschinenlesbares Medium zum Durchführen fortgeschrittener Authentifizierungstechniken sowie zugehörige Anwendungen. Das Verfahren umfasst: Empfangen einer Richtlinie, die einen Satz akzeptabler Authentifizierungsfunktionen identifiziert; Bestimmen eines Satzes von Clientauthentifizierungsfunktionen; und Filtern des Satzes akzeptabler Authentifizierungsfunktionen basierend auf dem bestimmten Satz von Clientauthentifizierungsfunktionen, um zu einem gefilterten Satz von einer oder mehreren Authentifizierungsfunktionen zum Authentifizieren eines Nutzers des Clients zu gelangen.

Der Erfindung liegt demgegenüber die Aufgabe zugrunde, ein verbessertes Verfahren zur Authentifizierung eines Nutzers zu ermöglichen.

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Die Erfindung schlägt ein Verfahren und ein Kommunikationssystem zur verhaltensbasierten Authentifikation eines Nutzers vor, welche eine Authentifizierung ohne PIN oder Passwort ermöglichen. Die Grundlage der Authentifizierung ist ein individuelles intrinsisches Verhalten des Nutzers, welches durch eine Verhaltensweise oder eine Verhaltensgewohnheit des Nutzers definiert ist. Die verhaltensbasierte Authentifikation ermöglicht es dem Nutzer dadurch Zugriff auf das Kommunikationssystem, dessen Speicher oder Anwendungen zu erlangen, indem er sich so verhält, wie er es gewohnt ist. Der Nutzer muss sich daher kein Passwort, keine PIN, keine spezielle Geste oder ähnliche Authentifizierungsmittel merken. Alle grundlegenden Daten werden von dem Kommunikationssystem erfasst und alle grundlegenden Operationen werden von dem Kommunikationssystem beziehungsweise seinem Prozessor ausgeführt. Insbesondere sensible Daten, welche ein persönliches Verhalten des Nutzers wiederspiegeln, verbleiben ausschließlich in einem internen Speicher des Kommunikationssystems.

Das in dem vorgeschlagenen Verfahren verwendete mobile, tragbare Kommunikationssystem weist mindestens einen Sensor zur Erfassung verhaltensbasierter Daten des Nutzers auf. Ferner weist das Kommunikationssystem ein Mittel zur Erfassung zumindest eines Umweltparameters, welcher einen Umwelteinfluss beschreibt, der dazu geeignet ist, das Verhalten des aktuellen Nutzers zu beeinflussen, auf. Ferner weist das Kommunikationssystem ein Klassifikationsmodul, einen Prozessor und einen Speicher auf. Das Verfahren zur Authentifizierung eines Nutzers des Kommunikationssystems mittels einer verhaltensbasierten Authentifizierung umfasst nach Ausführungsformen die folgenden Schritte:
- Erfassen der verhaltensbasierten Daten des aktuellen Nutzers,
- Erfassen des zumindest einen Umweltparameters,
- Auswerten der erfassten verhaltensbasierten Daten durch das Klassifikationsmodul, wobei das Auswerten ein Prüfen umfasst, ob die erfassten Daten des aktuellen Nutzers gespeicherten verhaltensbasierten Daten eines registrierten Nutzers entsprechen, wobei das Auswerten unter Verwendung des zumindest einen Umweltparameters an den Umwelteinfluss angepasst wird,
- Erzeugen eines ersten Authentifizierungssignals, falls die ausgewerteten verhaltensbasierten Daten des aktuellen Nutzers den gespeicherten verhaltensbasierten Daten des registrierten Nutzers entsprechen, wobei das Authentifizierungssignal eine erfolgreiche Authentifizierung des aktuellen Nutzers signalisiert.

Bei einer verhaltensbasierten Authentifizierung eines Nutzers wird zwischen zwei Typen von Nutzern unterschieden. Einerseits ist der registrierte Nutzer derjenige Nutzer, welcher erkannt werden soll. Andererseits ist der aktuelle Nutzer derjenige Nutzer, der das Kommunikationssystem aktuell bedienen bzw. benutzen möchte. Kann der aktuelle Nutzer mit dem registrierten Nutzer durch den Authentifizierungsprozess identifiziert werden, so wird dem aktuellen Nutzer der Zugriff auf das Kommunikationssystem, dessen Anwendungen oder dessen Speicher gewährt. Stimmt der aktuelle Nutzer nicht mit dem registrierten Nutzer überein, so identifiziert das Kommunikationssystem den aktuellen Nutzer als eine andere, nicht nutzungsberechtigte Person und verweigert den Zugriff. Im Folgenden wird mit "der Nutzer" der aktuelle Nutzer des Kommunikationssystems bezeichnet. Ist der registrierte Nutzer gemeint, ist dies explizit als "der registrierte Nutzer" gekennzeichnet.

Der registrierte Nutzer ist in dem Kommunikationssystem registriert. Der Zugriff auf das Kommunikationssystem wird dabei jedem Nutzer gewährt, der durch das Kommunikationssystem authentifiziert wird. Dabei können beispielsweise mehrere Nutzer in dem Kommunikationssystem registriert sein, die alle Zugriff erlangen können, sofern das jeweilige Authentifizierungssignal Informationen einer erfolgreichen Authentifizierung umfasst.

Ein mobiles, tragbares Kommunikationssystem kann ein einzelnes eigenständiges Gerät oder mehrere mechanisch und/oder kommunikativ miteinander verbundene Geräte umfassen. Ein solches Kommunikationssystem kann zum Beispiel umfassen: ein Smartphone, ein Tablet, einen Personal Digital Assistant, einen Pager, Smart-Glasses, eine Smart-Watch, ein Navigationsgerät, einen Activity Tracker, ein Gerät zur Erfassung medizinischer Daten, insbesondere physiologischer Daten wie ein Pulsmessgerät oder ein Blutdruckmessgerät. Die verhaltensbasierte Authentifizierung lässt sich von allen mobilen und tragbaren Geräten und Systemen ausführen, die in der Lage sind, elektronisch Daten zu verarbeiten und mindestens einen Sensor zur Erfassung von verhaltensbasierten Daten aufweisen.

Beispielhaft könnte ein mobiles, tragbares Kommunikationssystem ein Smartphone umfassen, wobei das Smartphone einen Sensor zur Erfassung einer grobmotorischen Bewegung des Gehens aufweist. Ferner kann ein zweites Kommunikationssystem ein Smartphone und eine Smart-Watch umfassen, wobei die Smart-Watch den Puls und den Blutdruck des Nutzers misst. Anhand eines Vergleichs der Daten, beispielsweise der Bewegungsdaten und/oder der biometrischen Daten, des Nutzers und des registrierten Nutzers kann der Nutzer als der registrierte Nutzer identifiziert werden oder nicht.

Verhaltensbasierte Daten sind Daten, welche sich aus dem natürlichen Verhalten des Nutzers ableiten lassen. Beispielsweise bewegt sich jeder Nutzer auf seine eigene Weise und jeder Benutzer zeigt ein bestimmtes Verhalten in Bezug auf sein Kommunikationsgerät, insbesondere, wenn es sich bei dem Kommunikationsgerät um ein Smart-Phone handelt. Aus der Bewegung und dem Anwendungsverhalten des Nutzers können beispielsweise verschiedene Parameter erlangt werden, welche das Verhalten des Nutzers quantisieren. Das Verhalten des Nutzers lässt sich somit durch einen oder mehrere numerische Werte ausdrücken, welche dem Nutzer, bzw. seinem Verhalten zuordenbar sind. Da sich das Verhalten eines jeden Nutzers von dem Verhalten anderer Nutzer unterscheidet, kann der Nutzer anhand der verhaltensbasierten Daten identifiziert werden. Eine Überprüfung der Identität des Nutzers anhand der verhaltensbasierten Daten wird verhaltensbasierte Authentifikation genannt.

Ein Umweltparameter beschreibt einen Umwelteinfluss auf den Nutzer. Als Umweltparameter gelten im Allgemeinen Parameter, die durch die Umwelt bestimmt sind und nicht von dem Nutzer und seinem Verhalten abhängen. Umweltparameter können beispielsweise Parameter sein, die das aktuelle Wetter, insbesondere die Luftfeuchte, den Luftdruck, die Umgebungstemperatur, die Intensität der Sonnenstrahlen, die Windgeschwindigkeit oder die Windrichtung umfassen. Beispielsweise kann sich der Nutzer in einem trockenen Gebiet, in einer (Groß-) Stadt, in einem Wald, an der Küste oder auf dem Meer aufhalten. Umweltparameter können auch die geographischen und/oder politischen Rahmenbedingungen umfassen. Ferner können Umgebungsparameter die Position des Nutzers, insbesondere die Umgebung des Nutzers umfassen. Beispielsweise eine ausgerufene Sicherheits- oder Warnstufe für bestimmte Regionen, eine Lawinenwarnung, eine Terrorwarnung, eine Unfallmeldung, eine Erdbebengefahr oder eine ausgebrochene Krankheit können als Umweltparameter erfasst werden.

Das Verhalten des Nutzers kann durch Umweltparameter beeinflusst werden, sodass die erfassbaren verhaltensbezogenen Daten ebenfalls von dem Umweltparameter abhängen können. Beispielsweise kann ein Nutzer bei Temperaturen über 38° C einen anderen Gang aufweisen als bei Temperaturen, die um die Raumtemperatur liegen. Oder ein Nutzer reagiert nervös auf eine öffentlich ausgerufene Warnmeldung, beispielsweise eine Sturmwarnung, was sich auf den Ruhepuls des Nutzers auswirken kann. Weitere Umweltparameter können die Umgebungslautstärke, insbesondere bei hoher Verkehrsdichte oder an Bahnhöfen, oder eine Umgebungsbewegung sein. Eine Umgebungsbewegung findet statt, wenn sich der Nutzer in einem bewegten Inertialsystem aufhält. Beispielsweise in einem Zug oder auf einem Schiff, insbesondere bei Wellengang.

Bei bekannten Authentifizierungsverfahren werden die Umgebung und ihre Einflüsse nicht berücksichtigt. Das erfindungsgemäße Verfahren berücksichtigt den Einfluss eines Umweltparameters auf den Nutzer für eine Authentifizierung anhand von verhaltensbasierten Daten. Das Auswerten der verhaltensbasierten Daten wird erfindungsgemäß entsprechend dem zumindest einen erfassten Umweltparameter angepasst.

Dadurch ergibt sich in vorteilhafter Weise, dass sich der Nutzer auch unter verschiedenen Umwelteinflüssen erfolgreich Authentifizieren kann.

In einer weiteren Ausführungsform umfasst das Kommunikationssystem ein Umweltparameterklassifikationsmodul. Das Umweltparameterklassifikationsmodul ist mit Trainingsdatensätzen einer Nutzerkohorte für ein Bestimmen von Korrekturen zum Anpassen der Auswertung der erfassten verhaltensbasierten Daten des registrierten Nutzers an Umwelteinflüsse trainiert. Das Anpassen der Auswertung der erfassten verhaltensbasierten Daten an den zumindest einen Umweltparameter umfasst:
I. die Eingabe des erfassten zumindest einen Umweltparameters in das Umweltparameterklassifikationsmodul,
II. das Bestimmen von zumindest einer Korrektur für die Auswertung der erfassten verhaltensbasierten Daten des registrierten Nutzers durch das Umweltparameterklassifikationsmodul,
III. Anpassen der Auswertung der erfassten verhaltensbasierten Daten des registrierten Nutzers an den Umwelteinfluss unter Verwendung der Korrektur.

Die erfassten verhaltensbasierten Daten des registrierten Nutzers beschreiben dabei das Verhalten des registrierten Nutzers. Durch den erfolgreichen Vergleich der verhaltensbasierten Daten des aktuellen Nutzers mit den gespeicherten verhaltensbasierten Daten des registrierten Nutzers, kann der aktuelle Nutzer als der registrierte Nutzer identifiziert werden. Dieser Vergleich wird unter Verwendung der, aus dem Umweltparameter bestimmten, Korrektur angepasst.

Das Umweltparameterklassifikationsmodul kann ferner als ein Teil des Klassifikationsmoduls ausgebildet sein. Alternativ kann das Umweltparameterklassifikationsmodul als ein separates Modul ausgebildet sein.

In einer weiteren Ausführungsform umfasst das Kommunikationssystem eine Kommunikationsschnittstelle, wobei das Kommunikationssystem über die Kommunikationsschnittstelle den zumindest einen Umweltparameter empfängt. Die Kommunikationsschnittstelle kann insbesondere als eine Drahtloskommunikationsschnittstelle ausgebildet sein.

In vorteilhafter Weise kann das Kommunikationssystem Informationen von anderen Systemen verwenden, um eine Korrektur aus einem Umweltparameter zu bestimmen. Beispielsweise kann das Kommunikationssystem über die Drahtloskommunikationsschnittstelle mit einem öffentlichen Funknetzwerk oder dem Internet kommunizieren und darüber einen oder mehrere Umweltparameter empfangen. In einer weiteren Ausführungsform kann das Kommunikationssystem die über die Drahtloskommunikationsschnittstelle empfangenen Umweltparameter mit Umweltparametern ergänzen, die durch einen Sensor des Kommunikationssystems erfasst wurden. Insbesondere über die Drahtlosschnittstelle empfangene Nachrichten können über einen Sensor erfasste Umweltparameter, wie beispielsweise Wetterdaten, ergänzen.

In einer weiteren Ausführungsform umfasst das Erfassen des zumindest einen Umweltparameters über die Kommunikationsschnittstelle das Empfangen von Nachrichten, amtliche Mitteilungen und/oder Wetterdaten.

In vorteilhafter Weise kann der zumindest eine Umweltparameter mit Daten übertragen werden, die dem Kommunikationssystem über ein Netzwerk sowieso zur Verfügung stehen. Insbesondere Nachrichten und Wetterdaten stehen in öffentlichen Netzwerken zur Verfügung, sodass Smartphone-Nutzer sich Nachrichten über eine entsprechende Software anschauen oder lesen können und stets über das aktuelle Wetter informiert sind. Mit oder aus diesen Daten können beispielsweise Umweltparameter bestimmt werden, welche sich dazu eignen, das Verhalten des Nutzers zu beeinflussen. Wird beispielsweise eine Sturmwarnung von einem Wetterdienst oder eine polizeiliche Warnung vor Verkehrsstau ausgesprochen, so kann dies den Nutzer vorsichtiger werden lassen. Der Nutzer kann dadurch angespannt sein und beispielsweise vorsichtiger am Verkehr teilnehmen, was sich beispielsweise an seiner Gangart zeigen kann. Ferner kann sich das Verhalten des Nutzers aufgrund der Umweltparameter ändern, weil der Nutzer von seiner täglichen Routine abweicht. Beispielsweise nimmt er einen anderen Weg, um nach der Arbeit nach Hause zu kommen, weil er eine Staumeldung empfangen hat. Nachrichten können das Verhalten des Nutzers ebenfalls beeinflussen. Beispielsweise starke und kurzfristige wirtschaftliche Schwankungen können ein Nutzer zum Beispiel euphorisch, verärgert oder deprimiert stimmen, wodurch sich das Verhalten des Nutzers ebenfalls ändert.

In einer weiteren Ausführungsform umfasst das Kommunikationssystem zumindest einen zweiten Sensor, mit dem das Kommunikationssystem die Umweltdaten, insbesondere in Form von Wetterdaten, erfassen kann.

In vorteilhafter Weise kann das Kommunikationssystem durch den zweiten Sensor dazu in der Lage sein, den zumindest einen Umweltparameter selbst zu erfassen. Das Kommunikationssystem kann damit unabhängig von einer hinreichenden Verbindungsstärke zu einem entsprechenden Netzwerk Umweltparameter erfassen, um die Auswertung der erfassten verhaltensbasierten Daten des registrierten Nutzers zu korrigieren.

In einer Ausführungsform umfassen die verhaltensbasierten Daten biometrische verhaltensbasierte Daten des Nutzers, wobei die biometrischen verhaltensbasierten Daten ferner Daten einer grobmotorischen Bewegung und/oder einer feinmotorischen Bewegung umfassen, wobei das Klassifikationsmodul dazu trainiert ist, eine grobmotorische Bewegung und/oder eine feinmotorische Bewegung zu erkennen.

Die Biometrie ist eine Wissenschaft, die sich mit Messungen an Lebewesen und den dazu erforderlichen Mess- und Auswerteverfahren beschäftigt. Als biometrische verhaltensbasierte Daten werden im folgenden Daten bezeichnet, welche von den biometrischen Eigenschaften und den verhaltensbasierten Eigenschaften des Nutzers abhängen. Beispielsweise die Gangart hängt sowohl von den biometrischen Eigenschaften des Nutzers, nämlich der Beinlänge, der Muskulatur, der Beweglichkeit der Gelenke etc. ab. Die Gangart ist aber auch durch Gewöhnung des Nutzers geprägt. Ein Nutzer kann beispielsweise einen gleichförmigen Gang, einen schleppenden Gang oder einen Gang, der eine starke Auf- und Abbewegung aufweist, umfassen. Diese Gangarten können trainiert und geübt werden und hängen von dem Verhalten des Nutzers ab. Die Gangart kann somit sowohl biometrisch, als auch verhaltensbasiert erfasst werden.

Auch biometrische verhaltensbasierte Daten können Umwelteinflüssen unterliegen. Beispielsweise kann eine brisante Meldung in den Nachrichten den Nutzer in Stress versetzen, wodurch er sich anders bewegt als in einem stressfreien Zustand.

Eine grobmotorische Bewegung und/oder eine feinmotorische Bewegung des aktuellen Nutzers wird durch mindestens einen Sensor als Daten erfasst. Das Klassifikationsmodul ist zur Erkennung eines generischen grobmotorischen Bewegungsmusters und/oder eines generischen grobmotorischen Bewegungsmusters mithilfe von Trainingsdatensätzen einer Nutzerkohorte trainiert.

Viele mobile, tragbare Kommunikationssysteme, wie Smartphones, sind heute ohnehin mit Sensoren ausgestattet, welche eine Lage des Geräts im Raum erfassen können, wodurch sich zum Beispiel die Anzeige auf dem Bildschirm in die richtige Position relativ zur räumlichen Orientierung des Geräts drehen kann. Ein solcher Sensor ist üblicherweise ein Beschleunigungssensor, ein Gyroskop oder eine Kombination aus beiden. Es ist nicht nur möglich, mit diesem Sensor die Raumlage des ersten Kommunikationssystems, sondern auch eine grobmotorische Bewegung des Nutzers zu erfassen, wodurch der Sensor als Bewegungssensor verwendet werden kann.

Eine grobmotorische Bewegung bezeichnet dabei alle Bewegungsfertigkeiten, die ein Mensch mit seinen Gliedmaßen, seinem Rumpf und seinem Kopf erlernen kann. Dabei werden Hauptmuskelgruppen beansprucht. Fertigkeiten der Grobmotorik sind zum Beispiel Gehen, Joggen, Rennen, Hüpfen, Fahrradfahren oder Autofahren. Auch das Bewegen des Armes, um eine Verrichtung, wie beispielsweise ein Heben eines Glases zum Trinken oder Essen, auszuführen, kann ebenso wie eine Armbewegung, um ein Mobiltelefon aus der Tasche zu ziehen, als grobmotorische Bewegung aufgefasst werden.

Eine feinmotorische Bewegung ist eine Bewegung feiner Muskelgruppen, wie beispielsweise die Muskulatur der Finger. Feinmotorik bezeichnet gezielte und koordinierte Bewegung, beispielsweise von Hand- und/oder Fingermuskulatur, aber auch den Muskeln des Mundes, der Augen und des Gesichtes. Die feinmotorische Bewegung, welche durch einen feinmotorischen Sensor des Kommunikationssystems erfasst wird, kann etwa eine bestimmte Bewegung der Finger umfassen.

Nach Ausführungsformen der Erfindung werden durch den Sensor zur Erfassung einer feinmotorischen Bewegung die Eingabegeschwindigkeit, der Eingabetakt und/oder die Eingabegenauigkeit des Nutzers erfasst, während er eine Eingabe in das Kommunikationssystem tätigt. Eine solche Eingabe kann beispielsweise, ohne darauf beschränkt zu sein, das Tippen von Wörtern bzw. Wischen von Wörtern, das heißt einem zu tippen analogen Eingabeverfahren, bei welchem der oder die Finger bei Auswahl von Buchstaben den Kontakt zur Bildschirmoberfläche jedoch beibehält, auf einer virtuellen Tastatur, das Nachfahren von auf dem Bildschirm gezeigten geometrischen Figuren oder eine andere Bewegung, mit der der Nutzer eine Eingabe tätigt, umfassen. Ferner können feinmotorische Bewegungen Änderungen der Ausrichtung, wie etwa des Neigungswinkels des Kommunikationssystems während der Nutzung umfassen.

Ein Sensor zur Erfassung einer feinmotorischen Bewegung kann beispielsweise als optisches System oder als ein Touchpad bzw. ein Touchscreen, insbesondere, jedoch ohne darauf beschränkt zu sein, ein resistiver Touchscreen, ein oberflächenkapazitiver Touchscreen, ein projiziert kapazitiver Touchscreen oder ein induktiver Touchscreen ausgebildet sein. Durch das Verwenden einer feinmotorischen Bewegung eines Nutzers erhöht sich die Sicherheit der verhaltensbasierten Authentifizierung, da weitere Parameter nötig sind, um den Nutzer zu authentifizieren.

Ein jeder Mensch führt diese grob- und/oder feinmotorischen Bewegungen auf seine eigene Art und Weise aus. Somit kann einem bestimmten Nutzer eines Kommunikationssystems ein ganz bestimmtes, charakteristisches Bewegungsprofil zugeordnet werden. Anhand dieses Bewegungsprofils ist der Nutzer identifizierbar. Die durch den mindestens einen Sensor erfassten Daten werden einem solchen Bewegungsprofil zugeordnet. Das Klassifikationsmodul ist ferner dazu konfiguriert das Bewegungsmuster des Nutzers zu erkennen.

Der Sensor des Kommunikationssystems kann ein interner Sensor zur Erfassung einer Bewegung des Kommunikationssystems sein (oder umfassen), wobei die Bewegung des Kommunikationssystems durch eine grob- und/oder feinmotorische Bewegung des aktuellen Nutzers des Kommunikationssystems verursacht wird, z. B. während der Nutzer das Kommunikationsgerät bei sich trägt. Die verhaltensbasierten Daten können Bewegungsdaten der Bewegung des Kommunikationssystems umfassen.

Trainieren umfasst in diesem Kontext, dass das Klassifikationsmodul durch Auswertung von Trainingsdatensätzen einerseits die Fähigkeit erlangt generische und andererseits nutzerindividuelle Bewegungsmuster zu erkennen. Ein Training zum Erkennen eines generischen Bewegungsmusters umfasst beispielsweise eine Auswertung mehrerer Trainingsdatensätze einer Nutzerkohorte, wobei jeder der Trainingsdatensätze jeweils einem der Nutzer der Nutzerkohorte zugeordnet ist und Daten zu einer für alle Nutzer der Nutzerkohorte identischen Bewegungsart umfasst. Durch die Auswertung wird ein für die identische Bewegungsart aller Nutzer gemeinsames generisches Bewegungsmuster identifiziert und zum zukünftigen Erkennen extrahiert. Ein Training zum Erkennen eines nutzerindividuellen Bewegungsmusters umfasst beispielsweise eine Auswertung von Bewegungsdaten eines individuellen Nutzers, wobei die Bewegungsdaten Daten zu einer bestimmten Bewegungsart umfassen. Durch die Auswertung wird ein für die entsprechende Bewegungsart nutzerindividuelles Bewegungsmuster identifiziert und zum zukünftigen Erkennen nutzerindividueller Bewegungsmuster extrahiert. Diese Auswertung erfolgt unter Verwendung eines generischen Bewegungsmusters für die bestimmte Bewegungsart, welche zuvor ebenfalls trainiert wurde.

Nach Ausführungsformen weist das mobile, tragbare Kommunikationssystem zur Ausführung der verhaltensbasierten Authentifizierung eines Nutzers beispielsweise mindestens einen Sensor (z.B. einen internen Bewegungssensor des Kommunikationssystems) zur Erfassung von Daten einer grob- und/oder feinmotorischen Bewegung des Nutzers, ein Klassifikationsmodul, ein Betriebssystem bzw. eine Anwendung, einen Prozessor und einen internen Speicher auf. Der Sensor zur Erfassung der verhaltensbasierten Daten ist dazu konfiguriert, eine grob- und/oder feinmotorische Bewegung des Nutzers zu erfassen, z.B. mittels einer Erfassung einer Bewegung des Kommunikationssystems, die durch die grob- und/oder feinmotorische Bewegung des Nutzers verursacht wird. Das Klassifikationsmodul ist für die Klassifikation der verhaltensbasierten Daten konfiguriert, auf das Erkennen einer grob- und/oder feinmotorischen Bewegung des Nutzers trainiert, implementiert ein Maschinenlernverfahren und wird durch den Prozessor des mobilen, tragbaren Kommunikationssystems ausgeführt, wobei das Betriebssystem bzw. die Anwendung dazu in der Lage ist den Zugriff auf das Speichersystem aufgrund des Erfolgs der Authentifizierung zu steuern.

Führt der Nutzer beispielsweise eine grobmotorische Bewegung aus und trägt dabei das mobile, tragbare Kommunikationssystem bei sich (z.B. in einer Tasche eines Bekleidungsstücks des Nutzers, wie z.B. in seiner Jacken- oder Hosentasche, oder direkt am Körper), so kann der Sensor diese grobmotorische Bewegung in Form von grobmotorischen Bewegungsdaten erfassen, und zwar aufgrund der Bewegung des Kommunikationssystems, die mittelbar (über das Bekleidungsstück) oder unmittelbar (wenn der Nutzer das Kommunikationssystem am Körper trägt) durch die grobmotorische Bewegung des Nutzers verursacht wurde. Der Sensor kann beispielsweise als ein Beschleunigungssensor oder ein Gyroskop oder eine Kombination aus beidem ausgebildet sein. Die Bewegung des Nutzers kann beispielsweise ein Gehen, ein Joggen, ein Rennen oder eine Bewegung des Armes sein, falls das Kommunikationsgeräts, welches den Sensor aufweist, am Arm befestigt ist.

Unter einer grobmotorischen Bewegung können beispielsweise Bewegungsabläufe wie zum Beispiel Gehen, Joggen, Rennen, Hüpfen, Klettern, Balancieren, Fahrradfahren, Autofahren oder eine Bewegung des Armes etwa beim Trinken, beim Schauen auf eine Armbanduhr oder beim Herausziehen des mobilen, tragbaren Kommunikationssystems aus einer Tasche verstanden werden.

Durch die Verwendung der biometrischen verhaltensbasierten Daten des Nutzers zur Authentifizierung des Nutzers ergibt sich in vorteilhafter Weise, dass die Daten, welche zur Authentifizierung herangezogen werden, höchst persönlich vom Nutzer abhängig sind. Insbesondere biometrische verhaltensbasierten Daten bieten eine hohe Fälschungssicherheit, wodurch die Sicherheit der Authentifizierung gesteigert wird.

Nach Ausführungsformen umfassen die verhaltensbasierten Daten des Nutzers Bewegungsdaten einer Bewegung des Kommunikationssystems, wobei die Bewegung des Kommunikationssystems durch eine grob- und/oder feinmotorische Bewegung des aktuellen Nutzers des Kommunikationssystems verursacht wird, während der Nutzer das Kommunikationsgerät bei sich trägt.

Nach Ausführungsformen ist der erste Sensor zum Erfassen der verhaltensbasierten Daten dazu konfiguriert, die Bewegung des Kommunikationssystems zu erfassen. Das Klassifikationsmodul des Kommunikationssystems ist zur Klassifikation des Verhaltens des aktuellen Nutzers anhand der verhaltensbasierten Daten konfiguriert, wobei das Klassifikationsmodul ferner zur Erkennung eines generischen Bewegungsmusters mit Hilfe von Trainingsdatensätzen einer Nutzerkohorte trainiert ist. Das Klassifikationsmodul wird durch den Prozessor des Kommunikationssystems ausgeführt.

Die verhaltensbasierte Authentifizierung weist dabei die folgenden Schritte auf:
- Wiederholtes Ausführen des Generierens eines Konfidenzwertes, wobei das Generieren des Konfidenzwertes die folgenden Schritte umfasst:
   - Erfassen der verhaltensbasierten Daten durch den mindestens einen internen Sensor des Kommunikationssystems,
   - Eingabe der Daten in das Klassifikationsmodul,
   - Generieren mindestens eines ersten Konfidenzwertes durch das Klassifikationsmodul,
   - Speichern des mindestens einen ersten Konfidenzwertes in dem Speicher des Kommunikationssystems,
- auf eine Authentifizierungsanfrage hin, Zugreifen auf den Speicher des Kommunikationssystems, um mindestens einen der generierten und gespeicherten ersten Konfidenzwerte aus dem Speicher auszulesen,
- Generieren des mindestens einen Klassifikationsergebnisses unter Verwendung des mindestens einen ersten Konfidenzwertes.

Nach Ausführungsformen umfassen die verhaltensbasierten Daten Bewegungsdaten einer grob- und/oder feinmotorische Bewegung des aktuellen Nutzers des Kommunikationssystems. Beispielsweise handelt es sich bei den Bewegungsdaten um Bewegungsdaten einer Bewegung des Kommunikationssystems, welche durch eine grob- und/oder feinmotorische Bewegung des aktuellen Nutzers des Kommunikationssystems verursacht wird, während der Nutzer das Kommunikationsgerät bei sich trägt.

Nach Ausführungsformen ist das Klassifikationsmodul zur Erkennung eines generischen grob- und/oder feinmotorischen Bewegungsmusters mit Hilfe von Trainingsdatensätzen einer Nutzerkohorte trainiert ist.

Auf die Authentifizierungsanfrage hin greift der Prozessor des mobilen, tragbaren Kommunikationssystems auf den internen Speicher des Kommunikationssystems zu und liest mindestens einen ersten Konfidenzwert aus. Der mindestens eine erste Konfidenzwert wird dann verwendet, um ein Klassifikationsergebnis zu generieren. Dieses wird gegen ein bestimmtes, vordefiniertes Prüfungskriterium geprüft. Erfüllt das Klassifikationsergebnis das Prüfungskriterium, so wird gemäß einer Ausführungsform ein Authentifizierungssignal erzeugt, wobei das Authentifizierungssignal die Information des Erfolges der Authentifizierung des Nutzers umfasst und den Zugriff auf das Speichersystem gewährt. Wird das Prüfungskriterium durch das Klassifikationsergebnis nicht erfüllt, so wird dem Nutzer kein Zugriff auf das Speichersystem gewährt. Das Prüfkriterium ist nach Ausführungsformen erfüllt, falls der erste Konfidenzwert anzeigt, dass die ausgewerteten Verhaltensbasierten Daten den gespeicherten verhaltensbasierten Daten entsprechen.

In einer weiteren Ausführungsform ist das Prüfungskriterium erfüllt, wenn mindestens ein Klassifikationsergebnis einen durch das Prüfungskriterium vorgegebenen Schwellenwert überschreitet und/oder ein durch das Prüfungskriterium vorgegebenes Höchstalter des mindestens einen Klassifikationsergebnisses nicht überschritten wird.

In einer Ausführungsform ist in dem Speicher des mobilen, tragbaren Kommunikationssystems mindestens ein Muster in Form einer Musterfunktion und mindestens ein Vergleichsdatensatz gespeichert, wobei der Vergleichsdatensatz eine Mehrzahl der verhaltensbasierten Daten mit grob- und/oder feinmotorischen Daten umfasst, wobei aus der Mehrzahl der verhaltensbasierten Daten des ersten Vergleichsdatensatzes mindestens ein erster Vergleichsparameter errechnet wird, wobei das Klassifikationsmodul auf die Eingabe der verhaltensbasierten Daten hin die folgenden Schritte ausführt:
- Bestimmen eines Klassifikationsparameters für jeden Parameter, den die verhaltensbasierten Daten umfassen, wobei das Bestimmen der Klassifikationsparameter aus den grob- und/oder feinmotorischen Bewegungsdaten ein Vergleichen der erfassten grob- und/oder feinmotorischen Bewegungsdaten der erfassten verhaltensbasierten Daten mit der mindestens einen Musterfunktion, ein Zuordnen der verhaltensbasierten Daten zu dem der Musterfunktion zugeordneten ersten Muster und ein Erhalten von mindestens einem dem ersten Muster entsprechenden Klassifikationsparameter umfasst, falls die grob- und/oder feinmotorischen Bewegungsdaten dem mindestens einen, ersten Muster zugeordnet werden können,
- Errechnen eines ersten Konfidenzwertes für jeden Klassifikationsparameter durch einen Vergleich des mindestens einen Klassifikationsparameters mit dem jeweiligen Vergleichsparameter des Vergleichsdatensatzes.

Nach Ausführungsformen wird unter Verwendung der Konfidenzwerte eine Zuordnungswahrscheinlichkeit berechnet, welche angibt mit welcher Wahrscheinlichkeit es sich bei dem aktuellen Nutzer um den registrierten Nutzer handelt. Nach einer Ausführungsform werden die ersten Konfidenzwerte zu einem resultierenden Konfidenzwert durch den Prozessor des mobilen, tragbaren Kommunikationssystems verarbeitet, wobei der resultierende Konfidenzwert die Zuordnungswahrscheinlichkeit angibt. Nach einer Ausführungsform werden die einzelnen ersten Konfidenzwerte bei der Auswertung jeweils mit einem Gewichtungsfaktor versehen, wobei die Gewichtungsfaktoren dem jeweiligen ersten Konfidenzwert zugeordnet sind.

In einer weiteren Ausführungsform umfasst das Kommunikationssystem Anwendungen, wobei die verhaltensbasierten Daten ferner Anwendungsdaten des Nutzers umfassen.

In einer weiteren Ausführungsform können die Anwendungsdaten umfassen:
- Positionsdaten des Kommunikationssystems, welche durch ein Verfahren zur Positionsbestimmung durch einen dritten Sensor zur Bestimmung der Position des Kommunikationssystems erfasst werden, und/oder
- Anwendungsnutzungsdaten des aktuellen Nutzers, und/oder
- Verbindungsdaten des Kommunikationssystems mit anderen Geräten und/oder
- Kalender- und/oder Uhrzeitdaten.

Die Positionsdaten des Kommunikationssystems werden beispielsweise durch ein Verfahren zur Positionsbestimmung durch einen Positionssensor des Kommunikationssystems erfasst. Ein solches Verfahren kann zum Beispiel ein Erfassen eines GPS-Signals, eines Galileo-Signals oder einer triangulierten Position aus WLAN-Verbindungsdaten oder Verbindungsdaten eines sonstigen Funknetzes umfassen, welches Funkzellen aufweist, wie etwa ein Mobilfunknetz.

Die Positionsdaten können ferner beispielsweise dazu verwendet werden, den Luftdruck bzw. die lokalen Wetterdaten bei der Authentifizierung zu bestimmen. Beispielsweise können sich die Außentemperatur und/oder der Luftdruck in einer bestimmten Höhe über dem Meeresspiegel auf das Verhalten des Nutzers auswirken.

Durch das Verwenden der Positionsdaten zur Authentifikation des Nutzers ergibt sich in vorteilhafter Weise, dass ein regelmäßiger Aufenthaltsort des Nutzers (zum Beispiel Zuhause, bei der Arbeit oder an anderen Orten, die er regelmäßig aufsucht) erfasst wird. Ein unberechtigter Nutzer, insbesondere ein Dieb, der das Kommunikationssystem benutzen möchte, wird sich in der Regel nicht an den Orten aufhalten, welche der registrierte Nutzer regelmäßig aufsucht. Dadurch ist das Kommunikationssystem in der Lage zu erkennen, ob der Nutzer der registrierte Nutzer ist. Damit können die Positionsdaten zur Verbesserung der verhaltensbasierten Authentifikation beitragen.

Insbesondere die Erfassung der Positionsdaten über einen längeren Zeitraum hinweg kann die Sicherheit des Systems steigern, da der Dieb viele der regelmäßig aufgesuchten Orte des Nutzers kennen und sich zusätzlich über längere Zeit an diesen aufhalten muss, um sich erfolgreich authentifizieren zu können.

Die Anwendungsdaten umfassen ein Anwendungsnutzungsverhalten des Nutzers, wobei das Anwendungsnutzungsverhalten Informationen umfasst, welche beschreiben, wann welche Anwendungen von Nutzer auf dem Kommunikationssystem gestartet und/oder ausgeführt werden. So kann zum Beispiel erfasst werden, wann bzw. wie oft der Nutzer unter Verwendung welcher Anwendung Radio hört und/oder welchen Radiosender er hört, Nachrichten liest oder seine Kamera bedient. Insbesondere im Alltag oft verwendete Anwendungen können ein nutzerspezifisches Anwendungsnutzungsprofil ergeben, anhand dessen der Nutzer identifiziert werden kann.

Durch das Miteinbeziehen des Anwendungsnutzungsverhaltens des Nutzers in das Authentifizierungsverfahren kann die Sicherheit des Verfahrens erhöht werden, da ein unberechtigter Nutzer, insbesondere ein Dieb, welcher das Kommunikationssystem gestohlen hat, auch das Anwendungsnutzungsverhalten des Nutzers imitieren müsste, um erfolgreich authentifiziert zu werden.

Die Verbindungsdaten des Kommunikationssystems mit anderen Kommunikationsgeräten und Kommunikationssystemen, wie zum Beispiel Computern, kommunikationsfähigen Haushaltsgeräten, WLAN-Routern etc., können dazu verwendet werden, ein typisches Verbindungsmuster des Nutzers aufzuzeigen. So können zum Beispiel einzelne Geräte über WLAN, Bluetooth, RFID, NFC oder ein Kabel mit dem Kommunikationssystem verbunden werden. Für den Nutzer kann ein Verbindungsprofil angelegt werden, welches Informationen über die regelmäßigen Verbindungen des Kommunikationssystems mit weiteren Geräten enthält.

Beispielsweise kann ein Nutzer das Kommunikationssystem mit dem privaten WLAN einer Wohnung oder einem öffentlichen WLAN verbinden. In einer weiteren Ausführungsform der Erfindung verbindet der Nutzer das Kommunikationssystem mit Haushaltsgeräten und/oder einem Computer über das Internet oder ein Intranet, wodurch sich ein nutzerspezifisches Verbindungsprofil ergibt. Dieses Verbindungsprofil kann beispielsweise, ohne darauf beschränkt zu sein, eine Verbindung zu einer Waschmaschine, einem Trockner, einem Kühlschrank oder ähnlichen Haushaltsgeräten, sowie Geräten eines Smart-Home-Systems, wie etwa Beleuchtung, Alarmanlage, Klimaanlage, Heizung, Audioanlagen, Video- bzw. Fernsehanlagen, und/oder einem PC umfassen, welche der Nutzer Zuhause, über das Internet, ein Intranet oder individuelle Funkverbindungen ansteuert.

Durch die Verwendung der Verbindungsdaten des Nutzers zur verhaltensbasierten Authentifizierung des Nutzers ergibt sich in vorteilhafter Weise, dass ein unberechtigter Nutzer die Geräte kennen und gegebenenfalls Zugriff auf die Geräte besitzen muss, mit denen der registrierte Nutzer normalerweise das Kommunikationsgerät verbindet.

Durch die Verwendung der Verbindungsdaten zur Authentifikation eines Nutzers ergibt sich in vorteilhafter Weise, dass der aktuelle Nutzer, welcher zum Beispiel eine Smartwatch trägt, sich über das Tragen der Smartwatch authentifizieren kann. Somit fungiert die Smartwatch als eine Art Schlüssel. Ein Dieb, welcher das Kommunikationssystem gestohlen hat, müsste also auch die Smartwatch in seinen Besitz bringen, um sich zu authentifizieren.

Kalender- und/oder Uhrzeitdaten können durch eine im Kommunikationssystem implementierte Uhr oder eine externe Uhr, deren Signal durch einen Sensor, insbesondere ein Funksignal durch einen Funksensor, des Kommunikationssystems empfangen wird, erfasst werden. In einer weiteren Ausführungsform der Erfindung werden die Verbindungsdaten des Kommunikationssystems mit anderen Geräten und/oder die Positionsdaten des ersten Kommunikationssystems mit den Kalender- und/oder Uhrzeitdaten korreliert.

Durch die Verwendung der Kalender- und/oder Uhrzeitdaten zur verhaltensbasierten Authentifizierung des Nutzers ergibt sich in vorteilhafter Weise, dass insbesondere durch die Kombination mit den vorherigen Anwendungen ein zeitspezifisches Anwendungsverhalten des Nutzers erstellt werden kann. So kann zum Beispiel erkannt werden, dass sich von Montag bis Freitag der Nutzer auf dem Weg zur Arbeit befindet und dabei einen bestimmten Radiosender hört und am Wochenende einen Spaziergang unternimmt und dabei ausgewählte Musik über eine Musikanwendung abspielt oder, dass der Nutzer jeden Abend zu einer festen Uhrzeit, beispielsweise um 20 Uhr, die Nachrichten über sein Kommunikationssystem liest. Die Verwendung der Kalender- und/oder Uhrzeitdaten kann somit eine erhöhte Sicherheit des Verfahrens zufolge haben, indem sie zu einem zeitlich strukturierten Anwendungsnutzungsprofil des Nutzers beitragen, welches gegenüber einem zeitlich unstrukturierten Anwendungsnutzungsprofil schwerer zu imitieren ist. Ferner kann das Verhalten des Nutzers mit der Tageszeit, dem Wochentag und/oder der Jahreszeit variieren.

Ferner ist es möglich Einträge des Kalenders des Nutzers auf Ereignisse zu überprüfen, die dazu geeignet sein können, das Verhalten des Nutzers zu beeinflussen. Ein Nutzer kann sich beispielsweise vor einem anstehenden Bewerbungsgespräch anders verhalten, als vor einer anstehenden Trauerfeier.

Für die Authentifizierung können ferner biometrische verhaltensunabhängige Daten verwendet werden. Biometrische verhaltensunabhängige Daten umfassen dabei Messwerte für eine Mehrzahl von biometrischen Parametern.

Als biometrische Parameter werden Parameter bezeichnet, welche den Körper eines Nutzers und seine Funktionen quantifizieren. Dabei kann es sich beispielsweise um Eigenschaften des Körpers handeln, wie beispielsweise den Augenabstand, die Ohrmuschelform, die Schuhgröße, das Irismuster, die Handlinien, die Gesichtsform oder das Fingerabdruckmuster. Ferner können biometrische Parameter auch Parameter umfassen, die sich mit der Zeit ändern können. Im Gegensatz zu biometrischen verhaltensbasierten Daten umfassen biometrische verhaltensunabhängige Daten die biometrischen Parameter des Nutzers, die nicht durch das Verhalten bestimmt oder beeinflusst werden.

In einer Ausführungsform umfasst das Auswerten der verhaltensbasierten Daten die folgenden Schritte:
- Generieren von Vergleichsparametern aus einem Vergleichsdatensatz, wobei der Vergleichsdatensatz die gespeicherten Daten umfasst,
- Generieren von Klassifikationsparametern aus den verhaltensbasierten Daten,
- Vergleichen der Vergleichsparameter mit den Klassifikationsparametern und
- Berechnen einer Zuordnungswahrscheinlichkeit aus einem Ergebnis des Vergleichs,

Die Zuordnungswahrscheinlichkeit ist eine Wahrscheinlichkeit, mit der es sich bei dem aktuellen Nutzer um den registrierten Nutzer handelt.

In Momenten, in denen der Nutzer das Kommunikationssystem nicht bei sich trägt bzw. in denen er das Kommunikationssystem nicht verwendet, werden ebenfalls Daten erfasst. Das Kommunikationssystem vergleicht die erfassten Daten mit dem Vergleichsdatensatz und bestimmt somit, ob der Nutzer das Kommunikationssystem nutzt und/oder bei sich trägt. Nutzt eine Person das Kommunikationssystem, welche nicht der registrierte Nutzer ist, beispielsweise weil der Nutzer das Kommunikationssystem der Person ausgehändigt hat oder weil die Person dem Nutzer das Kommunikationssystem entwendet hat, so unterscheiden sich die erfassten Daten ebenfalls von den Daten des Vergleichsdatensatzes.

Ein Vergleichsdatensatz umfasst Daten des Nutzers, welche das Verhalten des Nutzers charakterisieren. Die Daten des Vergleichsdatensatzes und die erfassten Daten umfassen mindestens einen Parameter, welcher das Verhalten des Nutzers quantifiziert. Der Vergleichsdatensatz umfasst die Daten des in dem Kommunikationssystem registrierten Nutzers. Die erfassten Daten umfassen die Daten des aktuellen Nutzers. Das Klassifikationsmodul generiert aus dem Vergleich der aus den erfassten Daten generierten Klassifikationsparameter mit den aus dem Vergleichsdatensatz generierten Vergleichsparametern einen ersten Konfidenzwert, welcher den quantitativen Unterschied zwischen den Klassifikationsparametern und den Vergleichsparametern, ausdrückt. Der Konfidenzwert lässt sich als eine Zuordnungswahrscheinlichkeit ausdrücken, mit der dem Nutzer die Identität eines registrierten Nutzers zugeordnet wird.

In einer Ausführungsform werden die einzelnen Klassifikationsparameter bei der Berechnung der Zuordnungswahrscheinlichkeit mit jeweils einem Gewichtungsfaktor gewichtet, wobei die Gewichtungsfaktoren dem jeweiligen Klassifikationsparameter zugeordnet werden.

Durch das Verwenden von Gewichtungsfaktoren für die jeweiligen Klassifikationsparameter bei der Berechnung der Zuordnungswahrscheinlichkeit kann sich in vorteilhafter Weise eine Erhöhung der Genauigkeit der Zuordnungswahrscheinlichkeit und somit bei der Authentifizierung ergeben. Die einzelnen Klassifikationsparameter können nach Wichtigkeit und/oder Genauigkeit ihrer Bestimmbarkeit gewichtet werden. Da sich jeder Nutzer unterschiedlich verhält, spielen auch die einzelnen Klassifikationsparameter unterschiedlich starke Rollen bei der verhaltensbasierten Authentifizierung des Nutzers. Ein erster Nutzer könnte beispielsweise regelmäßig eine Radioanwendung seines Kommunikationssystems nutzen, während ein zweiter Nutzer niemals eine Radioanwendung nutzt. Durch die Möglichkeit des Gewichtens der einzelnen Klassifikationsparameter kann dem Klassifikationsparameter für die Nutzung einer Radioanwendung für den ersten Nutzer ein höheres Gewicht zugewiesen werden als dem zweiten Nutzer.

In einer weiteren Ausführungsform der Erfindung sind die Gewichtungsfaktoren der Klassifikationsparameter durch eine Authentifizierungsanfrage vorgegeben, die dem Verfahren zur Authentifizierung des Nutzers vorausgeht. Durch das Vorgeben der Gewichtungsfaktoren durch die Authentifizierungsanfrage kann sich in vorteilhafter Weise ergeben, dass unterschiedliche Klassifikationsparameter individuell in Abhängigkeit davon gewichtet werden können, wie hoch ein Sicherheitsgrad der Authentifizierung sein muss. So können beispielsweise bei Authentifizierungen, die einer sehr hohen Zuordnungswahrscheinlichkeit bedürfen, alle Parameter miteinbezogen werden. Demgegenüber werden beispielsweise bei einer Authentifizierung, welche einer niedrigen Sicherheitsstufe bedarf, nur einige oder ein einzelner Klassifikationsparameter zur Auswertung herangezogen. Ein hoher Sicherheitsgrad kann beispielsweise für ein Starten einer Online-Banking-Anwendung gewünscht sein. Ein weniger hoher Sicherheitsgrad kann beispielsweise für ein Ausführen einer Musikanwendung gewünscht sein.

In einer weiteren Ausführungsform der Erfindung sind die einzelnen Gewichtungsfaktoren der jeweiligen Klassifikationsparameter fest vorgegeben. Fest vorgegeben meint in diesem Zusammenhang, dass die Gewichtungsfaktoren von vornerein beispielsweise bei der Erstinbetriebnahme des Kommunikationssystems festgelegt werden und keine Änderung der Gewichtungsfaktoren während des bestimmungsmäßigen Betriebes des Kommunikationssystems vorgegeben sind.

Durch das Vorgeben der Gewichtungsfaktoren für die Klassifikationsparameter ergibt sich in vorteilhafter Weise ein reduzierter Rechenaufwand, welcher insbesondere für mobile, tragbare Kommunikationssysteme einen niedrigen Batterieverbrauch zufolge hat. Das mobile, tragbare Kommunikationssystem muss nicht überprüfen, welche Gewichtungsfaktoren für welchen Klassifikationsparameter festzulegen sind, sondern letztendlich nur in seinem Speicher die entsprechenden Klassifikationsparameter und dessen Gewichtungsfaktor auslesen.

In einer weiteren Ausführungsform der Erfindung legt der Nutzer in einem Initiierungsprozess die Gewichtungsfaktoren der einzelnen Klassifikationsparameter selbst fest. Die festgelegten Gewichtungsfaktoren werden dann in einer Konfigurationsdatei in dem Speicher des Kommunikationssystems gespeichert.

Durch das Festlegen der Gewichtungsfaktoren durch den registrierten Nutzer selbst ergibt sich in vorteilhafter Weise, dass der registrierte Nutzer selbst bestimmen kann, wie weit sein Anwendungsverhalten und sein Verhaltensmuster zur verhaltensbasierten Authentifizierung beitragen. Dies erhöht die Freiheit des registrierten Nutzers bei der Konfiguration des Systems, da der registrierte Nutzer selbst entscheiden kann, welche Klassifikationsparameter von seinem Verhaltensmuster umfasst werden. Zum Beispiel kann der registrierte Nutzer festlegen, dass das Verwenden einer feinmotorischen Bewegung nicht oder nur sehr schwach in die Generierung des Klassifikationsergebnisses miteingehen soll, da er das Kommunikationssystem, insbesondere zur Texteingabe, üblicherweise nur unregelmäßig nutzt. Der gleiche Nutzer könnte hingegen die Klassifikationsparameter bezüglich einer grobmotorischen Bewegung stärker in die Generierung des Klassifikationsergebnisses miteinfließen lassen, da er einen sehr strukturierten Tagesablauf hat und mit hoher Regelmäßigkeit an bestimmten Orten Sport treibt.

Die Gewichtungsfaktoren der einzelnen Klassifikationsparameter werden nach einer weiteren Ausführungsform durch eine zentrale Instanz, beispielsweise den Hersteller des Kommunikationssystems, einen Dritthersteller oder einen Operator bzw. Eigentümer des Kommunikationssystems festgelegt, wobei der Eigentümer nicht unbedingt der Nutzer des Kommunikationssystems sein muss.

In einer Ausführungsform umfasst das Verfahren ferner ein Trainieren des Klassifikationsmoduls, sofern die Authentifizierung erfolgreich war, wobei das Trainieren des Klassifikationsmoduls ein Hinzufügen der erfassten verhaltensbasierten Daten zu dem Vergleichsdatensatz und ein Entfernen von gespeicherten verhaltensbasierten Daten aus dem Vergleichsdatensatz, welche älter als ein Schwellenalter sind, umfasst. Das Klassifikationsmodul wird auf das nutzerspezifische Verhalten des aktuellen Nutzers unter der Voraussetzung trainiert, dass gemäß dem Klassifikationsergebnis der aktuelle Nutzer ein in dem Kommunikationssystem registrierter Nutzer ist. Das Kommunikationssystem speichert die erfassten Daten, um diese für einen Vergleich mit neuen Daten eines nächsten Authentifizierungsversuchs zu verwenden. Dazu muss das Kommunikationssystem jedoch die Information eines Erfolges der Authentifizierung erhalten, aus welcher sich ergibt, dass die erfassten Daten auch tatsächlich dem registrierten Nutzer zuzuordnen sind.

Durch das Hinzufügen der Daten zu dem entsprechenden Vergleichsdatensatz im Falle einer erfolgreichen Authentifizierung des Nutzers kann sich in vorteilhafter Weise ein rückgekoppeltes Trainieren des Klassifikationsmoduls ergeben. Der Vergleichsdatensatz und somit die Vergleichsparameter können sich dem Verhalten des Nutzers anpassen, wodurch das Verfahren gegenüber geringfügigen Verhaltensänderungen resistent werden kann bzw. sich diesem anpassen kann. Eine solche Verhaltensänderung kann beispielsweise durch eine Verletzung des Nutzers hervorgerufen werden, welche die Gangart oder das Schreibverhalten beeinflusst. Ein weiteres Beispiel für eine Verhaltensänderung stellt der dauerhafte Wechsel zu einem anderen Radiosender mittels einer Radioanwendung dar. Gefällt dem Nutzer beispielsweise das gesendete Programm seines bisher gehörten Senders nicht mehr, so sucht er sich einen neuen. In einem weiteren Beispiel ändert sich der Ruhepuls des Nutzers, weil er zum Beispiel seit geraumer Zeit an einem Trainingsprogramm teilnimmt, wodurch sich die Gangart langsam ändern kann. Die sich langsam ändernde Gangart würde nicht mehr richtig zugeordnet werden können, sobald der Unterschied der entsprechenden Klassifikationsparameter zu den entsprechenden Vergleichsparametern zu groß wird. Bei solchen und ähnlichen Verhaltensänderungen kann sich der Nutzer aufgrund des Speicherns der Daten in dem Speicher des Kommunikationssystems und des Hinzufügens der Daten zu dem entsprechenden Vergleichsdatensatz auch weiterhin erfolgreich authentifizieren. Die neu gespeicherten Daten können dabei nach Ausführungsformen mit oder ohne die vom Umweltparameter abhängende Korrektur gespeichert werden.

In einer weiteren Ausführungsform der Erfindung werden die Daten, welche Teil des jeweiligen Vergleichsdatensatzes sind, aus dem Speicher des Kommunikationssystems gelöscht, wenn die Daten älter als eine festgelegte Zeit sind. Die festgelegte Zeit kann beispielsweise Tage, Wochen, Monate oder Jahre betragen. Wird durch das Löschen der Daten der Vergleichsdatensatz vollständig gelöscht, so wird gemäß einer weiteren Ausführungsform ein Signal erzeugt, welches dem Nutzer signalisiert, dass eine Authentifizierung über den gelöschten Vergleichsdatensatz nicht länger möglich ist, bis entsprechende Vergleichsdaten wieder vorhanden sind, das heißt ein neuer Vergleichsdatensatz generiert wurde. Vergleichsdaten für einen solchen neuen Vergleichsdatensatz können beispielsweise erfasst werden, indem sich der Nutzer nicht-verhaltensbasiert authentifiziert, beispielsweise über eine PIN oder ein analoges Verfahren, und im Voraus oder im Nachhinein so verhält, dass die neu erfassten Daten in dem Speicher des ersten Kommunikationssystems gespeichert werden, womit die erfassten Daten einen neuen Vergleichsdatensatz bilden.

Das Löschen der Daten bei Erreichen eines festgelegten Alters der Daten kann in vorteilhafter Weise ergeben, dass sich der Vergleichsdatensatz und somit die Vergleichsparameter bei Verhaltensänderungen des Nutzers mit verändern können. Da sich das Verhalten des Nutzers, insbesondere über einen längeren Zeitraum von beispielsweise einem Jahr oder mehr, verändern kann, ist es für das Verfahren vorteilhaft, wenn sich die Vergleichsparameter mit dem Verhalten des Nutzers mitändern, d.h. möglicherweise veraltete Daten, welche das aktuelle Verhalten des Nutzers nicht mehr korrekt wiederzugeben vermögen, vorsorglich gelöscht werden. Das Löschen von Daten eines bestimmten Alters bewirkt somit, dass das Verhalten des Nutzers in der Vergangenheit, welches nicht notwendigerweise mit dem Verhalten des Nutzers in der Gegenwart übereinstimmen muss, keinen Einfluss auf die verhaltensbasierte Authentifizierung des Nutzers nimmt. Das Alter von Daten bemisst sich beispielsweise ab dem Zeitpunkt der Erfassung und/oder der Speicherung der Daten.

Die Vergleichsparameter werden in einer Ausführungsform erneut aus einem modifizierten Vergleichsdatensatz errechnet, um eine nächste Authentifizierung des Nutzers mit aktuellen Vergleichsparametern durchführen zu können.

In einer weiteren Ausführungsform umfasst das Anpassen der Auswertung der erfassten verhaltensbasierten Daten des registrierten Nutzers an den Umwelteinfluss eine Auswahl der Klassifikationsparameter.

In vorteilhafter Weise können so Klassifikationsparameter für die Authentifizierung des Nutzers je nach Situation der Umwelt aus- oder angeschaltet werden. Beispielsweise kann ein Klassifikationsparameter das Trainingsverhalten des Nutzers im Freien anhand eines Startens einer Anwendung zur Überwachung der Pulsfrequenz während einer Trainingseinheit charakterisieren. Mit anderen Worten, durch den Start der Anwendung signalisiert der Nutzer dem Kommunikationssystem den Beginn einer Trainingseinheit. Der Start der Trainingseinheit sowie die Dauer des Trainings sind für den Nutzer charakteristisch und beschreiben sein Verhalten. Wenn es jedoch regnet und der Nutzer nicht trainieren kann, möchte der Nutzer trotzdem sein Kommunikationssystem verwenden können. Damit er sich verhaltensbasiert authentifizieren kann, erfasst das Kommunikationssystem die aktuellen Wetterdaten. Aufgrund des Wetters "Regen" werden die Klassifikationsparameter, die die Trainingseinheit beschreiben, nicht für eine Authentifizierung herangezogen.

In einem weiteren Beispiel gehört zum Verhalten des Nutzers, dass er eine Bestimmte Route für eine regelmäßige Reisestrecke wählt. Durch ein Empfangen einer Warnmeldung vor Verzögerungen auf der Route kann der Nutzer eine alternative Route wählen. Die Parameter für die Reise unter normalen Umständen werden in einem solchen Fall abgeschaltet.

In einer weiteren Ausführungsform umfasst das Anpassen der Auswertung der erfassten verhaltensbasierten Daten des registrierten Nutzers an den Umwelteinfluss ein Anpassen der Gewichtungsfaktoren durch die Korrektur.

In vorteilhafter Weise können die einzelnen Klassifikationsparameter feiner an die aktuellen Umweltparameter angepasst werden. Ein Klassifikationsparameter kann beispielsweise lediglich weniger stark gewichtet werden, anstatt vollständig außen vor gelassen zu werden. Dies kann eine feinere Einstellungsmöglichkeit und somit eine höhere Genauigkeit der Zuordnungswahrscheinlichkeit bewirken.

In einer weiteren Ausführungsform umfasst das Authentifizieren des Nutzers aufgrund der Zuordnungswahrscheinlichkeit ein Überprüfen, ob die Zuordnungswahrscheinlichkeit eine Schwellenwahrscheinlichkeit überschreitet, wobei das Anpassen der Auswertung der erfassten verhaltensbasierten Daten des registrierten Nutzers an den Umwelteinfluss ein Senken oder ein Erhöhen der Schwellenwahrscheinlichkeit umfasst. Beispielsweise kann bei vielen gleichzeitig auftretenden Umwelteinflüssen auf den Nutzer das Verhalten des Nutzers so stark von dem gewöhnlichen Verhalten abweichen, dass eine Korrektur von vielen Parametern oder Gewichtungsfaktoren sehr rechenintensiv wird.

In vorteilhafter Weise wird durch das Erhöhen oder Senken der Schwellenwahrscheinlichkeit das Verfahren zu Authentifizierung vereinfacht, da durch ein Korrigieren nur eines Wertes das Authentifizieren an den zumindest einen Umweltparameter angepasst werden kann.

In einer weiteren Ausführungsform umfasst das Anpassen der Auswertung der erfassten verhaltensbasierten Daten des registrierten Nutzers an den Umwelteinfluss ein Anpassen der Vergleichsparameter durch die Korrektur.

In vorteilhafter Weise können so Klassifikationsparameter, die bei unterschiedlichen Umweltbedingungen unterschiedliche Werte annehmen, mit zu der Bestimmung der Zuordnungswahrscheinlichkeit beitragen, ohne dass der jeweilige Gewichtungsfaktor geändert wird. Beispielsweise gehört es zum Verhalten eines Nutzers, dass er oft einen bestimmten Musikradiosender hört. Der Nutzer bekommt mit, dass in seiner unmittelbaren Umgebung eine akute Gefahr im Straßenverkehr, beispielsweise Personen auf der Fahrbahn, zu erwarten ist. Der Umweltparameter "Gefahr im Straßenverkehr" könnte beispielsweise durch eine amtliche (polizeiliche) Mitteilung empfangen worden sein. Damit der Nutzer sein Kommunikationssystem weiter verwenden und er trotzdem über das Radio die Nachrichten über einen Nachrichtenradiosender, also einen anderen als den gewohnten Musikradiosender, mitverfolgen kann, kann der Umweltparameter "Gefahr im Straßenverkehr" den Klassifikationsparameter, der die Senderauswahl quantifiziert, ändern.

In einer weiteren Ausführungsform ist der Nutzer authentifiziert, wenn die Zuordnungswahrscheinlichkeit einen bestimmten Schwellenwert überschreitet und/oder ein vorgegebenes Höchstalter der Zuordnungswahrscheinlichkeit nicht überschritten wird.

Das Überschreiten einer Schwellenwahrscheinlichkeit kann die Authentifizierung in vorteilhafter Weise vereinfachen, da nur ein Wert überprüft werden muss, um den Nutzer zu authentifizieren. Die Überprüfung, ob das Alter der Zuordnungswahrscheinlichkeit ein vorgegebenes Höchstalter nicht überschreitet kann in vorteilhafter Weise den Nutzungszeitraum begrenzen, mit der ein Nutzer das Kommunikationssystem nach einer erfolgreichen Authentifizierung nutzen kann. Insbesondere bei einem Diebstahl eines Kommunikationssystems, bei dem sich der Nutzer wenige Sekunden zuvor authentifiziert hat, kann die Nutzungsmöglichkeit für den Dieb minimiert werden, da das Kommunikationssystem für eine Authentifizierung eine neue Zuordnungswahrscheinlichkeit benötigt, die nicht älter als das Höchstalter ist. Das Höchstalter kann beispielsweise 30 Sekunden, eine Minute, oder einige Minuten umfassen.

In einer weiteren Ausführungsform der Erfindung muss sich der Nutzer nach einer Erstinbetriebnahme des Kommunikationssystems authentifizieren.

Eine Authentifikation nach einer Erstinbetriebnahme kann beispielsweise eine Eingabe eines Einmalpassworts bzw. einer Initialisierungs-PIN umfassen, welche einem registrierten Nutzer beispielsweise im Zuge eines rechtmäßigen Erwerbs des Kommunikationssystems zur Verfügung gestellt wird. Nach weiteren Ausführungsformen kann die Authentifikation nach einer Erstinbetriebnahme beispielsweise auch eine Eingabe bzw. ein Senden eines initialen Authentifizierungstokens in bzw. an das Kommunikationssystem umfassen. Das initiale Authentifizierungstoken kann beispielsweise von einem zentralen Authentifizierungsservice bereitgestellt werden, demgegenüber sich der Nutzer als berechtigter Nutzer authentifiziert hat.

Durch das Authentifizieren nach der Erstinbetriebnahme ergibt sich somit in vorteilhafter Weise, dass nur ein berechtigter Nutzer das noch untrainierte System nutzen kann. Im Falle einer Erstinbetriebnahme erfolgt nach und/oder zusammen mit der zuvor genannten Authentifizierung des berechtigten Nutzers, falls diese erfolgreich ist, beispielsweise eine automatische Personalisierung des Kommunikationssystems auf den berechtigten Nutzer. Im Zuge der Authentifizierung und/oder danach werden Daten für eine verhaltensbasierte Authentifizierung des berechtigten Nutzers erfasst und zu dem entsprechenden Vergleichsdatensatz hinzugefügt. Somit wird das Klassifikationsmodul auf den entsprechenden Nutzer trainiert, das heißt das Kommunikationssystem wird personalisiert. Schlägt die zuvor genannte Authentifizierung des berechtigten Nutzers fehl, so werden beispielsweise keine Daten erfasst oder erfasste Daten werden nicht zu dem Vergleichsdatensatz hinzugefügt.

In einer weiteren Ausführungsform der Erfindung muss der Nutzer das Kommunikationssystem nach der Erstinbetriebnahme personalisieren. Wird das Kommunikationssystem zum ersten Mal zur verhaltensbasierten Authentifizierung verwendet, sendet das Kommunikationssystem ein Signal an den Nutzer. Das Signal umfasst die Aufforderung zur Personalisierung des Kommunikationssystems durch den Nutzer durch ein gezieltes bzw. vorgegebenes Verhalten, welches mindestens einen Vergleichsdatensatz generiert. Beispielsweise wird der Nutzer aufgefordert, mit dem Kommunikationssystem zu laufen oder zu gehen.

Durch das Personalisieren des Kommunikationssystems nach der Erstinbetriebnahme aufgrund eines entsprechenden Signals ergibt sich in vorteilhafter Weise, dass der Nutzer das Verfahren zur verhaltensbasierten Authentifizierung möglichst früh anwenden kann. Das Personalisieren nach der Erstinbetriebnahme umfasst dabei das Erfassen von Daten, um daraus den entsprechenden Vergleichsdatensatz aufzubauen.

In einer Ausführungsform sind auf dem Kommunikationssystem mehrere Nutzer registriert und eine Zuordnungswahrscheinlichkeit wird für jeden Nutzer generiert, wobei das Klassifikationsmodul dazu konfiguriert ist einen Nutzer als einen der registrierten Nutzer zu identifizieren, wobei das Klassifikationsmodul konfiguriert ist einen Nutzerwechsel anhand der Daten zu erkennen, wobei das Klassifikationsmodul auf ein Erkennen einer grob- und/oder feinmotorischen Bewegung des Ab- und/oder Anlegens des Kommunikationssystems konfiguriert und auf ein Erkennen von nutzerspezifischen Bewegungsmustern in den Daten trainiert ist.

Nach umfasst die verhaltensbasierte Authentifizierung ferner:
- Wiederholtes Ausführen der Schritte:
   - Generieren mindestens eines zweiten Konfidenzwertes durch das Klassifikationsmodul),
   - Speichern des mindestens einen zweiten Konfidenzwertes in dem Speicher des Kommunikationssystems,
- auf eine Authentifizierungsanfrage hin, Zugreifen auf den Speicher des Kommunikationssystems, um mindestens einen der gespeicherten zweiten Konfidenzwerte aus dem Speicher auszulesen,
- Auswerten des mindestens einen zweiten Konfidenzwertes, um zu überprüfen, ob ein Nutzerwechsel stattgefunden hat,
- Verwerfen der bisherigen Konfidenzwerte, falls ein Nutzerwechsel stattgefunden hat.

Durch die Möglichkeit, mehrere Nutzer zu identifizieren, ergibt sich in vorteilhafter Weise, dass beispielsweise auch Dienstgeräte bzw. Dienstsysteme, die von einem Arbeitgeber an eine Mehrzahl von Mitarbeitern ausgegeben werden, welche das Kommunikationssystem abwechselnd benutzen, das Verfahren zur verhaltensbasierten Authentifizierung anwenden können.

In einer weiteren Ausführungsform der Erfindung ist das Klassifikationsmodul so konfiguriert, dass es einen Wechsel des Nutzers anhand von grob- und/oder feinmotorischen Daten erkennt. Dazu ist das Klassifikationsmodul beispielsweise auf ein Erkennen einer grob- und/oder feinmotorischen Bewegung des Ab- und Anlegens des ersten Kommunikationssystems konfiguriert. Die unter Umständen bisherige Zuordnungswahrscheinlichkeit wird im Falle eines Nutzerwechsels verworfen, um sicherzustellen, dass bei einem Nutzerwechsel ein nicht authentifizierter Nutzer das Kommunikationssystem verwendet. Dieser nicht authentifizierte Nutzer muss sich dann neu authentifizieren.

Im Weiteren werden Ausführungsformen der Erfindung mit Bezugnahme auf die Zeichnungen näher erläutert.

Es zeigen
- Figuren 1a - 1b: Kommunikationssysteme gemäß zweier Ausführungsformen,
- Figur 2: ein Verfahren gemäß einer Ausführungsform,
- Figuren 3a - 3b: ein Verfahren gemäß einer weiteren Ausführungsform, und
- Figur 4: ein Verfahren gemäß einer weiteren Ausführungsform.

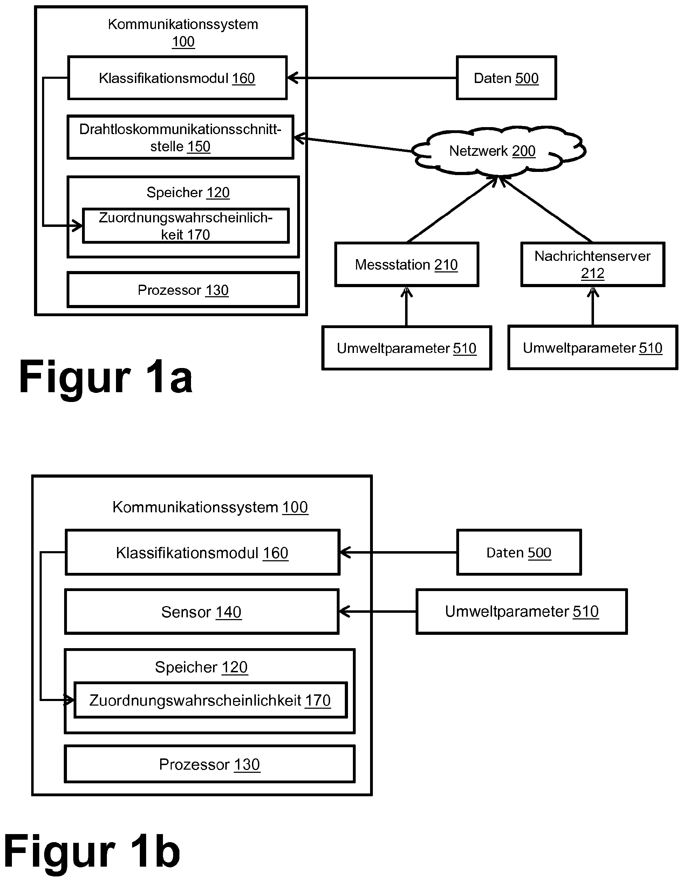

Figur 1a zeigt eine Ausführungsform eines mobilen, tragbaren Kommunikationssystems 100. Das Kommunikationssystem wird von einem Nutzer genutzt. Das Kommunikationssystem 100 umfasst ein Klassifikationsmodul 160, eine Drahtloskommunikationsschnittstelle 150, einen Speicher 120 und einen Prozessor 130. Über die Drahtloskommunikationsschnittstelle 150 kann das Kommunikationssystem 100 mit einem Netzwerk 200 kommunizieren. Das Netzwerk 200 kann beispielsweise das Internet, ein öffentliches oder privates Funknetzwerk oder ein anderes beliebiges Netzwerk sein. In einer weiteren Ausführungsform umfasst das Kommunikationssystem 100 eine Kommunikationsschnittstelle, um mit dem Netzwerk 200 über eine kabelgebundene Verbindung zu kommunizieren.

Über das Netzwerk 200 kann das Kommunikationssystem 100 Informationen von einem externen System abrufen. Zwei externe System sind in Figur 1a als Messstation 210 und als Nachrichtenserver 212 dargestellt. Eine Messstation 210 kann beispielsweise eine Wetterstation oder eine Verkehrsüberwachungsanlage sein. Ein Nachrichtenserver 212 kann beispielsweise mit einem Portal einer Tageszeitung verbunden sein und regelmäßig Nachrichten bereitstellen. In einer weiteren Ausführungsform sind das externe System und das Kommunikationssystem bilateral oder unilateral miteinander verbunden. Beispielsweise kann das externe System auch ein Radiosender sein, welcher die Informationen für das Kommunikationssystem ausstrahlt.

Das externe System, bzw. in Figur 1a die Messstation 210 und/oder der Nachrichtenserver 212, erfasst zumindest einen Umweltparameter 510 und sendet diesen, gegebenenfalls über das Netzwerk 200, an das Kommunikationssystem 100. Ferner erfasst das Kommunikationssystem 100 die verhaltensbasierten Daten 500 des Nutzers. Die Daten 500 werden durch das Klassifikationsmodul 160 ausgewertet. Dabei wird die Auswertung der Daten an den durch die Drahtloskommunikationsschnittstelle 150 empfangenen zumindest einen Umweltparameter 510 angepasst. Das Kommunikationsmodul 160 wird durch den Prozessor 130 ausgeführt. Schließlich werden aus den Daten 500 und unter Verwendung des zumindest einen Umweltparameters 510 eine Zuordnungswahrscheinlichkeit 170 und ein Authentifizierungssignal erzeugt. Die Zuordnungswahrscheinlichkeit 170 wird in dem Speicher 120 für spätere Authentifizierungsversuche gespeichert. Das Authentifizierungssignal signalisiert die erfolgreiche Authentifizierung des Nutzers.

Figur 1b zeigt ein ähnliches Kommunikationssystem 100, wie das Kommunikationssystem, das in Figur 1a gezeigt ist. Das Kommunikationssystem 100 in Figur 1b umfasst jedoch einen Sensor 140, mit dem es in der Lage ist, den zumindest einen Umweltparameter 510 selbst zu erfassen. Beispielsweise kann der Sensor 140 als Temperatursensor oder Luftdrucksensor ausgebildet sein, um die Umweltparameter "lokale Temperatur" des Kommunikationssystems 100 zu erfassen. Die Übrigen Komponenten und Eigenschaften des Kommunikationssystems 100 sind analog zu denen, die in Figur 1a beschrieben sind.

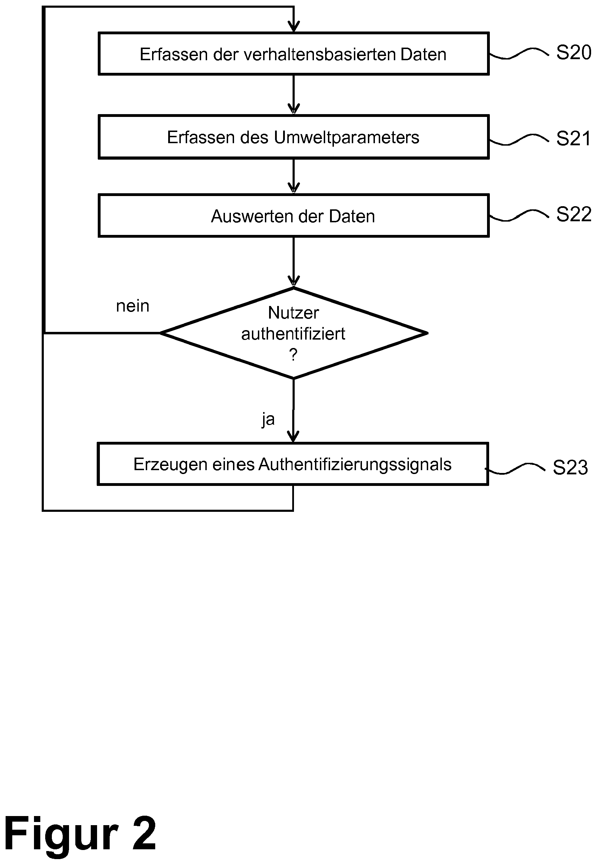

Figur 2 zeigt ein beispielhaftes Verfahren zur Authentifizierung eines Nutzers. Zunächst werden in den Schritten S20 und S21 die verhaltensbasierten Daten des Nutzers und zumindest ein Umweltparameter erfasst. Die Reihenfolge der Erfassung (S20 und S21) ist austauschbar. In einer weiteren Ausführungsform umfasst das Kommunikationssystem beispielsweise einen Multikernprozessor und erfasst die verhaltensbasierten Daten des Nutzers und den zumindest einen Umweltparameter gleichzeitig. In Schritt S22 werden die erfassten Daten unter Verwendung des zumindest einen Umweltparameters ausgewertet. Bei der Auswertung wird überprüft, ob der aktuelle Nutzer des Kommunikationssystems als der registrierte Nutzer des Kommunikationssystems identifiziert werden konnte. Ist dies der Fall, so wird in Schritt S23 ein Authentifizierungssignal erzeugt, welches dem Nutzer den Zugriff auf das Kommunikationssystem, dessen Speicher und/oder Anwendungen erlaubt. Das Kommunikationssystem ist anschließend bereit für eine weitere Authentifizierung.

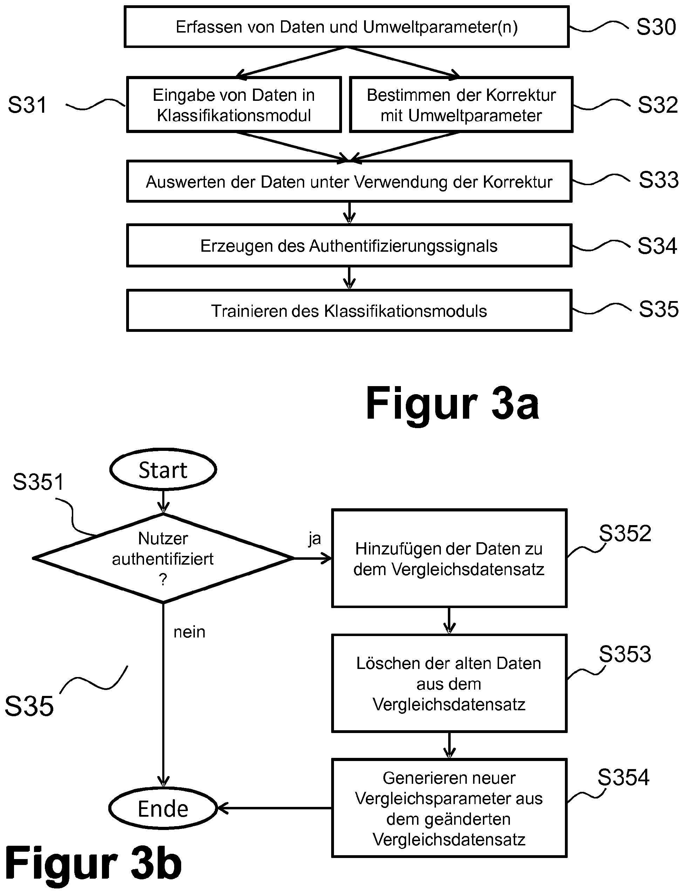

In Figur 3a ist eine detailliertere Ausführungsform des Verfahrens aus Figur 2 dargestellt. Nachdem in Schritt S30 die verhaltensbasierten Daten und der zumindest eine Umweltparameter erfasst wurden, werden die Daten in Schritt S31 in das Klassifikationsmodul des Kommunikationssystems eingeben. Parallel dazu wird in Schritt S32 aus dem zumindest einen Umweltparameter eine Korrektur bestimmt. Die Schritte S31 und S32 werden nicht unbedingt parallel zueinander ausgeführt. In Ausführungsformen werden die Schritte S31 und S32 in beliebiger Reihenfolge nacheinander ausgeführt.

Unter Verwendung der Korrektur wird ermittelt, ob der Nutzer authentifiziert wurde. Dies erfolgt durch eine Auswertung der Daten unter Verwendung der Korrektur in Schritt S33. Wurde der Nutzer erfolgreich Authentifiziert, wird in Schritt S34 ein Authentifizierungssignal generiert. Ferner wird das Klassifikationsmodul bei einer erfolgreichen Authentifizierung des Nutzers in Schritt S35 trainiert.

Das Trainieren des Klassifikationsmoduls (Schritt S35) ist in Figur 3b detaillierter dargestellt. Ob das Authentifizieren des Nutzers erfolgreich war, wird in Schritt S351 überprüft. Ist dies der Fall, wird das Trainieren des Klassifikationsmoduls durchgeführt. Das Trainieren des Klassifikationsmoduls umfasst mehrere Schritte. Zunächst werden in Schritt S352 die verhaltensbasierten Daten, mit denen der Nutzer erfolgreich authentifiziert wurde, einem Vergleichsdatensatz hinzugefügt. Der Vergleichsdatensatz umfasst beispielsweise einen Datensatz aus Daten, mit denen sich der Nutzer in der Vergangenheit erfolgreich authentifizieren konnte. In Schritt S353 werden Daten, deren Alter ein vorgegebenes Höchstalter überschreitet, aus dem Vergleichsdatensatz gelöscht. Die Reihenfolge der Schritte S352 und S353 ist beliebig und austauschbar. Nach der Modifikation des Vergleichsdatensatzes in den Schritten S352 und S353 werden aus dem Vergleichsdatensatz neue Vergleichsparameter für zukünftige Authentifizierungsversuche generiert. Die neuen Vergleichsparameter werden beispielsweise in den Speicher des Kommunikationssystems gespeichert und können von dort bei dem nächsten Authentifizierungsversuch ausgelesen werden.

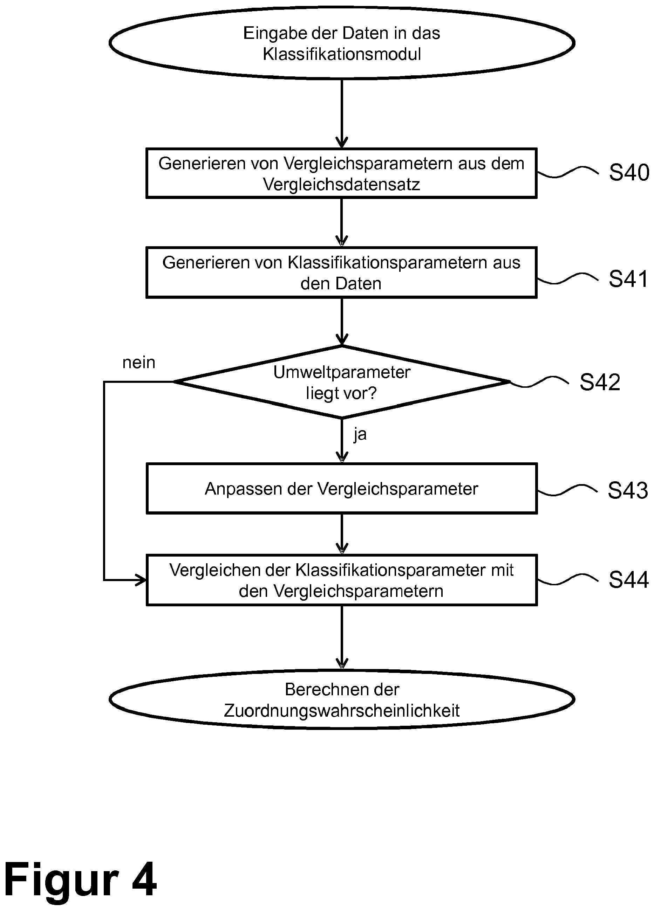

Figur 4 zeigt eine detaillierte Ausführungsform des Schrittes S22 aus Figur 2, dem Auswerten der Daten. Die Daten werden in das Klassifikationsmodul eingegeben. Zunächst werden in Schritt S40 aus dem Vergleichsdatensatz Vergleichsparameter generiert. Dieser Schritt kann nach Ausführungsformen im Anschluss an eine erfolgreiche Authentifizierung erfolgen (siehe insbesondere Figur 3b). In Schritt S41 werden aus den erfassten Daten Klassifikationsparameter analog zu den Vergleichsparametern generiert. Nun liegen Vergleichsparameter und Klassifikationsparameter vor, deren Anzahl identisch ist. In Schritt S42 erfolgt eine Überprüfung, ob ein Umweltparameter vorliegt. Ist dies der Fall folgt Schritt S43. Liegt kein Umweltparameter vor, wird der Schritt S43 übersprungen und das Verfahren fährt mit Schritt S44 fort.

Schritt 43 ist eine beispielhafte Ausführungsform der Korrektur. In Abhängigkeit von dem zumindest einen Umweltparameter werden die Vergleichsparameter modifiziert. In Schritt S44 werden die Klassifikationsparameter mit den eventuell angepassten Vergleichsparametern vergleichen. Die Vergleichsparameter repräsentieren ein quantisiertes Verhalten des registrierten Nutzers, da sie aus Daten generiert wurden, die zu einer erfolgreichen Authentifizierung in der Vergangenheit geführt haben. Die Klassifikationsparameter hingegen repräsentieren den aktuellen Nutzer, da sie aus den aktuell erfassten verhaltensbasierten Daten generiert wurden. Im Grunde wird in Schritt S44 das Verhalten des registrierten Nutzers mit dem Verhalten des aktuellen Nutzers verglichen.

Durch den Vergleich kann eine Zuordnungswahrscheinlichkeit berechnet werden, die aussagt, inwiefern die beiden Verhaltensweisen übereinstimmen. Die einzelnen Parameter können dabei nach Ausführungsformen unterschiedlich gewichtet sein.

Ist die Zuordnungswahrscheinlichkeit dann über einer vorgegebenen Schwellenwahrscheinlichkeit, so stimmt das Verhalten des aktuellen Nutzers mit dem Verhalten des registrierten Nutzers zumindest soweit überein, dass das Kommunikationssystem den aktuellen Nutzer als den registrierten Nutzer identifiziert. Der aktuelle Nutzer hat sich damit erfolgreich authentifiziert.

In weiteren Ausführungen können beispielsweise Gewichte der einzelnen Parameter bei der Berechnung der Zuordnungswahrscheinlichkeit durch die Korrektur geändert werden, oder eine Schwellwahrscheinlichkeit für die Authentifizierung des Nutzers erhöht oder gesenkt werden.

### Bezugszeichenliste

- 100: Kommunikationssystem
- 120: Speicher
- 130: Prozessor
- 140: Sensor
- 150: Drahtloskommunikationsschnittstelle
- 160: Klassifikationsmodul
- 170: Zuordnungswahrscheinlichkeit
- 200: Netzwerk
- 210: Messstation
- 212: Nachrichtenserver
- 500: Daten
- 510: Umweltparameter

## Patentansprüche

1. Verfahren zu einer Authentifizierung eines aktuellen Nutzers gegenüber einem mobilen, tragbaren Kommunikationssystem (100),
wobei das Kommunikationssystem (100) einen ersten Sensor aufweist und dazu konfiguriert ist, mit dem ersten Sensor verhaltensbasierte Daten des Nutzers zu erfassen,
wobei das Kommunikationssystem (100) ferner dazu konfiguriert ist, zumindest einen Umweltparameter zu erfassen, welcher einen Umwelteinfluss beschreibt, der dazu geeignet ist, das Verhalten des aktuellen Nutzers zu beeinflussen, wobei das Kommunikationssystem (100) ein Klassifikationsmodul (160) umfasst, wobei die verhaltensbasierten Daten ferner biometrische verhaltensbasierte Daten des Nutzers umfassen, wobei die biometrischen verhaltensbasierten Daten ferner Daten einer grobmotorischen Bewegung und/oder einer feinmotorischen Bewegung umfassen, wobei das Klassifikationsmodul (160) dazu trainiert ist, eine grobmotorische Bewegung und/oder eine feinmotorische Bewegung zu erkennen,
wobei das Verfahren eine verhaltensbasierte Authentifizierung durch das Kommunikationssystem (100) mit folgenden Schritten umfasst:
- Erfassen der verhaltensbasierten Daten des aktuellen Nutzers,
- Erfassen des zumindest einen Umweltparameters,
- Auswerten der erfassten verhaltensbasierten Daten durch das Klassifikationsmodul (160), wobei das Auswerten ein Prüfen umfasst, ob die erfassten Daten des aktuellen Nutzers gespeicherten verhaltensbasierten Daten eines registrierten Nutzers entsprechen, wobei das Auswerten unter Verwendung des zumindest einen Umweltparameters an den Umwelteinfluss angepasst wird,
- Erzeugen eines ersten Authentifizierungssignals, falls die ausgewerteten verhaltensbasierten Daten des aktuellen Nutzers den gespeicherten verhaltensbasierten Daten des registrierten Nutzers entsprechen, wobei das Authentifizierungssignal eine erfolgreiche Authentifizierung des aktuellen Nutzers signalisiert,
wobei das Auswerten der verhaltensbasierten Daten die folgenden Schritte umfasst:
- Generieren von Vergleichsparametern aus einem Vergleichsdatensatz, wobei der Vergleichsdatensatz die gespeicherten verhaltensbasierten Daten umfasst,
- Generieren von Klassifikationsparametern aus den erfassten verhaltensbasierten Daten,
- Vergleichen der Vergleichsparameter mit den Klassifikationsparametern und
- Berechnen einer Zuordnungswahrscheinlichkeit aus einem Ergebnis des Vergleichs,
wobei die Zuordnungswahrscheinlichkeit eine Wahrscheinlichkeit ist, mit der es sich bei dem aktuellen Nutzer um den registrierten Nutzer handelt,
wobei das Anpassen der Auswertung der erfassten verhaltensbasierten Daten des registrierten Nutzers an den Umwelteinfluss zumindest eine der folgenden Varianten umfasst:
• wobei die einzelnen Klassifikationsparameter bei der Berechnung der Zuordnungswahrscheinlichkeit jeweils mit einem Gewichtungsfaktor gewichtet werden, wobei die Gewichtungsfaktoren dem jeweiligen Klassifikationsparameter zugeordnet werden und wobei das Anpassen der Auswertung der erfassten verhaltensbasierten Daten des registrierten Nutzers an den Umwelteinfluss ein Anpassen der Gewichtungsfaktoren unter Verwendung einer Korrektur umfasst,
• wobei das Authentifizieren des Nutzers aufgrund der Zuordnungswahrscheinlichkeit ein Überprüfen umfasst, ob die Zuordnungswahrscheinlichkeit eine Schwellenwahrscheinlichkeit überschreitet, wobei das Anpassen der Auswertung der erfassten verhaltensbasierten Daten des registrierten Nutzers an den Umwelteinfluss ein Senken oder ein Erhöhen der Schwellenwahrscheinlichkeit umfasst,
• wobei das Anpassen der Auswertung der erfassten verhaltensbasierten Daten des registrierten Nutzers an den Umwelteinfluss ein Anpassen der Vergleichsparameter unter Verwendung der Korrektur umfasst.

2. Verfahren nach einem der vorangehenden Ansprüche, wobei das Kommunikationssystem (100) ein Umweltparameterklassifikationsmodul aufweist,
wobei das Umweltparameterklassifikationsmodul mit Hilfe von Trainingsdatensätzen einer Nutzerkohorte zu einem Bestimmen von Korrekturen zum Anpassen der Auswertung der erfassten verhaltensbasierten Daten des registrierten Nutzers an Umwelteinflüsse trainiert ist, wobei das Umweltparameterklassifikationsmodul durch den Prozessor (130) des Kommunikationssystems (100) ausgeführt wird,
wobei das Anpassen der Auswertung der erfassten verhaltensbasierten Daten des registrierten Nutzers umfasst:
i. Eingabe des zumindest einen Umweltparameters in das Umweltparameterklassifikationsmodul,
ii. Bestimmen der zumindest einen Korrektur für die Auswertung der erfassten verhaltensbasierten Daten des registrierten Nutzers durch das Umweltparameterklassifikationsmodul,
iii. Anpassen der Auswertung der erfassten verhaltensbasierten Daten des registrierten Nutzers an den Umwelteinfluss unter Verwendung der Korrektur.

3. Verfahren nach einem der vorangehenden Ansprüche, wobei das Kommunikationssystem ferner eine Kommunikationsschnittstelle umfasst, wobei das Erfassen des zumindest einen Umweltparameters ein Empfangen des zumindest einen Umweltparameters über die Kommunikationsschnittstelle, insbesondere das Empfangen von Nachrichten, amtlichen Mitteilungen und/oder Wetterdaten umfasst, und/oder
wobei das Kommunikationssystem (100) zumindest einen zweiten Sensor zum Erfassen des zumindest einen Umweltparameters, insbesondere in Form von Wetterdaten, umfasst.

4. Verfahren nach einem der vorherigen Ansprüche, wobei das Kommunikationssystem (100) Anwendungen umfasst, wobei die verhaltensbasierten Daten (500) ferner Anwendungsdaten des aktuellen Nutzers umfassen.

5. Verfahren nach Anspruch 4, wobei die Anwendungsdaten umfassen können:
- Positionsdaten des Kommunikationssystems (100), welche durch ein Verfahren zur Positionsbestimmung durch einen dritten Sensor (110) zur Bestimmung der Position des Kommunikationssystems (100) erfasst werden, und/oder
- Anwendungsnutzungsdaten des aktuellen Nutzers, und/oder
- Verbindungsdaten des Kommunikationssystems (100) mit anderen Geräten und/oder
- Kalender- und/oder Uhrzeitdaten.

6. Verfahren nach einem der vorherigen Ansprüche, wobei das Verfahren ferner ein Trainieren des Klassifikationsmoduls (160) umfasst, sofern die Authentifizierung erfolgreich war, wobei das Trainieren des Klassifikationsmoduls (160) ein Hinzufügen der erfassten verhaltensbasierten Daten zu dem Vergleichsdatensatz und ein Entfernen von gespeicherten verhaltensbasierten Daten aus dem Vergleichsdatensatz, welche älter als ein Schwellenalter sind, umfasst.

7. Verfahren nach einem der vorherigen Ansprüche, wobei das Anpassen der Auswertung der erfassten verhaltensbasierten Daten des registrierten Nutzers an den Umwelteinfluss ferner eine Auswahl einer Untermenge von Klassifikationsparametern aus den generierten Klassifikationsparametern umfasst.

8. Verfahren nach einem der vorherigen Ansprüche, wobei der Nutzer authentifiziert ist, falls:
- die Zuordnungswahrscheinlichkeit die vorgegebene Schwellenwahrscheinlichkeit überschreitet und/oder
- ein vorgegebenes Höchstalter der Zuordnungswahrscheinlichkeit nicht überschritten wird.

9. Kommunikationssystem (100) für eine Authentifizierung eines aktuellen Nutzers,
wobei das Kommunikationssystem (100) einen ersten Sensor zur Erfassung verhaltensbasierter Daten des Nutzers aufweist,
wobei das Kommunikationssystem (100) ein Mittel zur Erfassung zumindest eines Umweltparameters, welcher einen Umwelteinfluss beschreibt, der dazu geeignet ist, das Verhalten des aktuellen Nutzers zu beeinflussen,
wobei das Kommunikationssystem (100) ein Klassifikationsmodul (160) aufweist, wobei die verhaltensbasierten Daten ferner biometrische verhaltensbasierte Daten des Nutzers umfassen, wobei die biometrischen verhaltensbasierten Daten ferner Daten einer grobmotorischen Bewegung und/oder einer feinmotorischen Bewegung umfassen, wobei das Klassifikationsmodul (160) dazu trainiert ist, eine grobmotorische Bewegung und/oder eine feinmotorische Bewegung zu erkennen,
wobei das Kommunikationssystem (100) einen Prozessor und einen Speicher aufweist, wobei in dem Speicher Programminstruktionen gespeichert sind, die durch den Prozessor ausgeführt werden, wobei die Programminstruktionen das Kommunikationsgerät (100) dazu veranlassen:
- Erfassen der verhaltensbasierten Daten des aktuellen Nutzers durch das Mittel zur Erfassung der verhaltensbasierten Daten,
- Erfassen des zumindest einen Umweltparameters durch das Mittel zur Erfassung des zumindest einen Umweltparameters,
- Auswerten der erfassten verhaltensbasierten Daten durch das Klassifikationsmodul (160), wobei das Auswerten ein Prüfen umfasst, ob die erfassten Daten des aktuellen Nutzers gespeicherten verhaltensbasierten Daten eines registrierten Nutzers entsprechen, wobei das Auswerten unter Verwendung des zumindest einen Umweltparameters an den Umwelteinfluss angepasst wird,
- Erzeugen eines ersten Authentifizierungssignals, falls die ausgewerteten verhaltensbasierten Daten des aktuellen Nutzers den gespeicherten verhaltensbasierten Daten des registrierten Nutzers entsprechen, wobei das Authentifizierungssignal eine erfolgreiche Authentifizierung des aktuellen Nutzers signalisiert,
wobei das Auswerten der verhaltensbasierten Daten die folgenden Schritte umfasst:
- Generieren von Vergleichsparametern aus einem Vergleichsdatensatz, wobei der Vergleichsdatensatz die gespeicherten verhaltensbasierten Daten umfasst,
- Generieren von Klassifikationsparametern aus den erfassten verhaltensbasierten Daten,
- Vergleichen der Vergleichsparameter mit den Klassifikationsparametern und
- Berechnen einer Zuordnungswahrscheinlichkeit aus einem Ergebnis des Vergleichs,
wobei die Zuordnungswahrscheinlichkeit eine Wahrscheinlichkeit ist, mit der es sich bei dem aktuellen Nutzer um den registrierten Nutzer handelt,
wobei Anpassen der Auswertung der erfassten verhaltensbasierten Daten des registrierten Nutzers an den Umwelteinfluss zumindest eine der folgenden Varianten umfasst:
wobei Anpassen der Auswertung der erfassten verhaltensbasierten Daten des registrierten Nutzers an den Umwelteinfluss zumindest eine der folgenden Varianten umfasst:
• wobei die einzelnen Klassifikationsparameter bei der Berechnung der Zuordnungswahrscheinlichkeit jeweils mit einem Gewichtungsfaktor gewichtet werden, wobei die Gewichtungsfaktoren dem jeweiligen Klassifikationsparameter zugeordnet werden und wobei das Anpassen der Auswertung der erfassten verhaltensbasierten Daten des registrierten Nutzers an den Umwelteinfluss ein Anpassen der Gewichtungsfaktoren unter Verwendung der Korrektur umfasst,
• wobei das Authentifizieren des Nutzers aufgrund der Zuordnungswahrscheinlichkeit ein Überprüfen umfasst, ob die Zuordnungswahrscheinlichkeit eine Schwellenwahrscheinlichkeit überschreitet, wobei das Anpassen der Auswertung der erfassten verhaltensbasierten Daten des registrierten Nutzers an den Umwelteinfluss ein Senken oder ein Erhöhen der Schwellenwahrscheinlichkeit umfasst,
• wobei das Anpassen der Auswertung der erfassten verhaltensbasierten Daten des registrierten Nutzers an den Umwelteinfluss ein Anpassen der Vergleichsparameter unter Verwendung der Korrektur umfasst.

## Claims

1. A method for authenticating a current user to a mobile, portable communication system (100),
the communication system (100) having a first sensor and being configured for acquiring behavior-based data of the user by means of the first sensor,
the communication system (100) being further configured for acquiring at least one environmental parameter which describes an environmental influence that is suitable for influencing the behavior of the current user, the communication system (100) comprising a classification module (160), the behavior-based data further comprising biometric behavior-based data of the user, the biometric behavior-based data further comprising data of a gross motor movement and/or a fine motor movement, the classification module (160) being trained for detecting a gross motor movement and/or a fine motor movement,
the method comprising a behavior-based authentication by the communication system (100) having the following steps:
- acquiring the behavior-based data of the current user,
- acquiring the at least one environmental parameter,
- evaluating the acquired behavior-based data by the classification module (160), the evaluation comprising checking whether the acquired data of the current user corresponds to stored behavior-based data of a registered user, the evaluation being adapted to the environmental influence using the at least one environmental parameter,
- generating a first authentication signal if the evaluated behavior-based data of the current user corresponds to the stored behavior-based data of the registered user, the authentication signal signaling a successful authentication of the current user,
the evaluation of the behavior-based data comprising the following steps:
- generating comparison parameters from a comparison data set, the comparison data set comprising the stored behavior-based data,
- generating classification parameters from the acquired behavior-based data,
- comparing the comparison parameters with the classification parameters and
- calculating an assignment probability from a result of the comparison, the assignment probability being a probability with which the current user is the registered user,
the adaptation of the evaluation of the acquired behavior-based data of the registered user to the environmental influence comprising at least one of the following variants:
the individual classification parameters each being weighted with a weighting factor when calculating the assignment probability, the weighting factors being assigned to the respective classification parameter, and the adaptation of the evaluation of the acquired behavior-based data of the registered user to the environmental influence comprising an adaptation of the weighting factors using a correction,
the authentication of the user on the basis of the assignment probability comprising checking whether the assignment probability exceeds a threshold probability, the adaptation of the evaluation of the acquired behavior-based data of the registered user to the environmental influence comprising a lowering or an increasing of the threshold probability,
the adaptation of the evaluation of the acquired behavior-based data of the registered user to the environmental influence comprising an adaptation of the comparison parameters using the correction.

2. The method according to any one of the preceding claims, wherein the communication system (100) has an environmental parameter classification module,
wherein the environmental parameter classification module is trained with the aid of training data sets of a user cohort for determining corrections for adapting the evaluation of the acquired behavior-based data of the registered user to environmental influences, wherein the environmental parameter classification module is executed by the processor (130) of the communication system (100),
wherein the adaptation of the evaluation of the acquired behavior-based data of the registered user comprises:
i. inputting the at least one environmental parameter into the environmental parameter classification module,
ii. determining the at least one correction for the evaluation of the acquired behavior-based data of the registered user by the environmental parameter classification module,
iii. adapting the evaluation of the acquired behavior-based data of the registered user to the environmental influence using the correction.

3. The method according to any one of the preceding claims, wherein the communication system further comprises a communication interface, wherein the acquisition of the at least one environmental parameter comprises receiving the at least one environmental parameter via the communication interface, in particular the reception of messages, official notifications and/or weather data, and/or
wherein the communication system (100) comprises at least one second sensor for acquiring the at least one environmental parameter, in particular in the form of weather data.

4. The method according to any one of the preceding claims, wherein the communication system (100) comprises applications, wherein the behavior-based data (500) further comprise application data of the current user.

5. The method according to claim 4, wherein the application data may comprise:
- position data of the communication system (100), which data are acquired by a method for position determination by a third sensor (110) for determining the position of the communication system (100), and/or
- application usage data of the current user, and/or
- connection data of the communication system (100) to other devices and/or
- calendar and/or time data.

6. The method according to any one of the preceding claims, wherein the method further comprises training the classification module (160) if the authentication was successful, wherein the training of the classification module (160) comprises an adding of the acquired behavior-based data to the comparison data set and a removing of stored behavior-based data from the comparison data set which are older than a threshold age.

7. The method according to any one of the preceding claims, wherein the adaptation of the evaluation of the acquired behavior-based data of the registered user to the environmental influence further comprises a selection of a subset of classification parameters from the generated classification parameters.

8. The method according to any one of the preceding claims, wherein the user is authenticated if:
- the assignment probability exceeds the specified threshold probability and/or
- a specified maximum age of the assignment probability is not exceeded.

9. A communication system (100) for authenticating a current user,
the communication system (100) having a first sensor for acquiring behavior-based data of the user,
the communication system (100) a means for detecting at least one environmental parameter which describes an environmental influence which is suitable for influencing the behavior of the current user,
the communication system (100) having a classification module (160), the behavior-based data further comprising biometric behavior-based data of the user, the biometric behavior-based data further comprising data of a gross motor movement and/or a fine motor movement, the classification module (160) being trained to recognize gross motor movement and/or fine motor movement,
the communication system (100) having a processor and a memory, program instructions being stored in the memory, which program instructions are executed by the processor, the program instructions causing the communication device (100) to:
- acquire the behavior-based data of the current user by the means for acquiring the behavior-based data,
- acquire the at least one environmental parameter by the means for acquiring the at least one environmental parameter,
- evaluate the acquired behavior-based data by the classification module (160), the evaluation comprising checking whether the acquired data of the current user corresponds to stored behavior-based data of a registered user, the evaluation being adapted to the environmental influence using the at least one environmental parameter,
- generate a first authentication signal if the evaluated behavior-based data of the current user corresponds to the stored behavior-based data of the registered user, the authentication signal signaling a successful authentication of the current user,
the evaluation of the behavior-based data comprising the following steps:
- generating comparison parameters from a comparison data set, the comparison data set comprising the stored behavior-based data,
- generating classification parameters from the acquired behavior-based data,
- comparing the comparison parameters with the classification parameters and
- calculating an assignment probability from a result of the comparison,
the assignment probability being a probability with which the current user is the registered user,
adaptation of the evaluation of the acquired behavior-based data of the registered user to the environmental influence comprising at least one of the following variants:
adaptation of the evaluation of the acquired behavior-based data of the registered user to the environmental influence comprising at least one of the following variants:
the individual classification parameters each being weighted with a weighting factor when calculating the assignment probability, the weighting factors being assigned to the respective classification parameter, and the adaptation of the evaluation of the acquired behavior-based data of the registered user to the environmental influence comprising an adaptation of the weighting factors using a correction,
the authentication of the user on the basis of the assignment probability comprising checking whether the assignment probability exceeds a threshold probability, the adaptation of the evaluation of the acquired behavior-based data of the registered user to the environmental influence comprising a lowering or an increasing of the threshold probability,
the adaptation of the evaluation of the acquired behavior-based data of the registered user to the environmental influence comprising an adaptation of the comparison parameters using the correction.

## Revendications

1. Procédé d'authentification d'un utilisateur actuel vis-à-vis d'un système de communication (100) mobile portable,
dans lequel le système de communication (100) présente un premier détecteur et est conçu pour détecter des données de l'utilisateur basées sur le comportement avec le premier détecteur,
dans lequel le système de communication (100) est en outre conçu pour détecter au moins un paramètre environnemental, lequel décrit un facteur de l'environnement qui est approprié pour exercer une influence sur le comportement de l'utilisateur actuel, dans lequel le système de communication (100) comprend un module de classification (160),
dans lequel les données basées sur le comportement comprennent en outre des données basées sur le comportement biométriques de l'utilisateur, où les données biométriques basées sur le comportement comprennent en outre des données d'un mouvement de motricité grossière et/ou d'un mouvement de motricité fine, où le module de classification (160) est entraîné pour reconnaitre un mouvement de motricité grossière et/ou un mouvement de motricité fine,
où le procédé comprend une authentification basée sur le comportement par le système de communication (100) avec les étapes suivantes :
- la détection des données basées sur le comportement de l'utilisateur actuel,
- la détection de l'au moins un paramètre environnemental,
- l'évaluation des données basées sur le comportement détectées par le module de classification (160), où l'évaluation comprend une vérification si les données détectées de l'utilisateur actuel correspondent à des données basées sur le comportement enregistrées pour un utilisateur enregistré, où l'évaluation est adaptée au facteur environnemental moyennant l'emploi de l'au moins un paramètre environnemental,
- la création d'un premier signal d'authentification dans le cas où les données basées sur le comportement évaluées de l'utilisateur actuel correspondent aux données basées sur le comportement enregistrées de l'utilisateur enregistré, où le signal d'authentification signale une authentification réussie de l'utilisateur actuel,
où l'évaluation des données basées sur le comportement comprend les étapes suivantes :
- la génération de paramètres de comparaison à partir d'un ensemble de données de comparaison, où l'ensemble de données de comparaison comprend les données basées sur le comportement enregistrées,
- la génération de paramètres de classification à partir des données basées sur le comportement détectées,
- la comparaison des paramètres de comparaison avec les paramètres de classification, et
- le calcul d'une probabilité d'association à partir d'un résultat de la comparaison, où la probabilité d'association est une probabilité avec laquelle il s'agit de l'utilisateur enregistré dans le cas de l'utilisateur actuel,
dans lequel l'adaptation de l'évaluation des données basées sur le comportement détectées de l'utilisateur enregistrées au facteur environnemental comprend au moins une des variables suivantes :
• le cas où les paramètres de classification individuels sont pondérés respectivement avec un facteur de pondération lors du calcul de la probabilité d'association, où les facteurs de pondération sont associés au paramètre de classification respectif et où l'adaptation de l'évaluation des données basées sur le comportement détectées de l'utilisateur enregistré comprend une adaptation des facteurs de pondération moyennant l'emploi d'une correction,
• le cas où l'authentification de l'utilisateur, du fait de la probabilité d'association, comprend une vérification si la probabilité d'association dépasse une probabilité limite, où l'adaptation de l'évaluation des données basées sur le comportement détectées de l'utilisateur enregistré au facteur environnemental comprend une réduction ou une augmentation de la probabilité limite,
• le cas où l'adaptation de l'évaluation des données basées sur le comportement détectées de l'utilisateur enregistré comprend une adaptation des paramètres de comparaison moyennant l'emploi d'une correction.

2. Procédé selon l'une des revendications précédentes, dans lequel le système de communication (100) présente un module de classification de paramètres environnementaux,
dans lequel le module de classification de paramètres environnementaux est entrainé à l'aide d'ensembles de données d'entrainement d'une cohorte d'utilisateurs pour une détermination de corrections pour l'adaptation de l'évaluation des données basées sur le comportement détectées de l'utilisateur enregistré à des facteurs environnementaux, où le module de classification de paramètres environnementaux est exécuté par le processeur (130) du système de communication (100),
dans lequel l'adaptation de l'évaluation des données basées sur le comportement détectées de l'utilisateur enregistré comprend :
i. la saisie de l'au moins un paramètre environnemental dans le module de classification de paramètres environnementaux,
ii. la détermination de l'au moins une correction pour l'évaluation des données basées sur le comportement détectées de l'utilisateur enregistré par le module de classification de paramètres environnementaux,
iii. l'adaptation des données basées sur le comportement détectées de l'utilisateur enregistré au facteur environnemental moyennant l'emploi de la correction.

3. Procédé selon l'une des revendications précédentes, dans lequel le système de communication comprend en outre une interface de communication, où la détection de l'au moins un paramètre environnemental comprend la réception de l'au moins un paramètre environnemental par le biais de l'interface de communication, en particulier la réception d'informations, de communications officielles et/ou de données météorologiques, et/ou
dans lequel le système de communication (100) comprend au moins un deuxième détecteur pour la détection de l'au moins un paramètre environnemental, en particulier, sous la forme de données météorologiques.

4. Procédé selon l'une des revendications précédentes, dans lequel le système de communication (100) comprend des applications, dans lequel les données basées sur le comportement (500) comprennent en outre des données d'applications de l'utilisateur actuel.

5. Procédé selon la revendication 4, dans lequel les données d'applications peuvent comprendre :
- des données de position du système de communication (100), lesquelles sont détectées par un procédé de détermination de position par un troisième détecteur (110) permettant la détermination de la position du système de communication (100), et/ou
- des données d'application de l'utilisateur actuel, et/ou
- des données de connexion du système de communication (100) avec d'autres appareils, et/ou
- des données calendaires et/ou temporelles.

6. Procédé selon l'une des revendications précédentes, où le procédé comprend en outre un entraînement du module de classification (160) dans la mesure où l'authentification peut être réalisée, où l'entraînement du module de classification (160) comprend un ajout des données basées sur le comportement détectées à l'ensemble de données de comparaison et un retrait de données basées sur le comportement enregistrées à partir de l'ensemble de données de comparaison, lesquelles sont antérieures à une durée limite.

7. Procédé selon l'une des revendications précédentes, dans lequel l'adaptation de l'évaluation des données basées sur le comportement détectées de l'utilisateur enregistré au facteur environnemental comprend en outre une sélection d'un sous-ensemble de paramètres de classification à partir des paramètres de classification générés.

8. Procédé selon l'une des revendications précédentes, dans lequel l'utilisateur est authentifié si :
- une probabilité d'association dépasse la probabilité limite prédéfinie, et/ou
- une durée maximale prédéfinie de la probabilité d'association n'est pas dépassée.

9. Système de communication (100) destiné à une authentification d'un utilisateur actuel, où le système de communication (100) présente un premier capteur permettant la détection de données basées sur le comportement de l'utilisateur,
où le système de communication (100) présente un moyen permettant la détection d'au moins un paramètre environnemental, lequel décrit un facteur environnemental qui est approprié pour exercer une influence sur le comportement de l'utilisateur actuel,
où le système de communication (100) présente un module de classification (160),
où les données basées sur le comportement comprennent en outre des données basées sur le comportement biométriques de l'utilisateur, où les données biométriques basées sur le comportement comprennent en outre des données d'un mouvement de motricité grossière et/ou d'un mouvement de motricité fine, où le module de classification (160) est entraîné pour reconnaître un mouvement de motricité grossière et/ou un mouvement de motricité fine,
où le système de communication (100) présente un processeur et une mémoire, où des instructions de programme qui sont exécutées par le processeur sont enregistrées dans la mémoire, où les instructions de programme font en sorte que l'appareil de communication (100) provoque :
- la détection des données basées sur le comportement de l'utilisateur actuel par le moyen de détection des données basées sur le comportement,
- la détection de l'au moins un paramètre environnemental par le moyen de détection de l'au moins un paramètre environnemental,
- l'évaluation des données basées sur le comportement détectées par le module de classification (160), où l'évaluation comprend une vérification si les données détectées de l'utilisateur actuel correspondent à des données basées sur le comportement enregistrées pour un utilisateur enregistré, où l'évaluation est adaptée au facteur environnemental moyennant l'emploi de l'au moins un paramètre environnemental,
- la création d'un premier signal d'authentification dans le cas où les données basées sur le comportement évaluées de l'utilisateur actuel correspondent aux données basées sur le comportement enregistrées de l'utilisateur enregistré, où le signal d'authentification signal une authentification réussie de l'utilisateur actuel,
où l'évaluation des données basées sur le comportement comprend les étapes suivantes :
- la génération de paramètres de comparaison à partir d'un ensemble de données de comparaison, où l'ensemble de données de comparaison comprend les données basées sur le comportement enregistrées,
- la génération de paramètres de classification à partir des données basées sur le comportement détectées,
- la comparaison des paramètres de comparaison avec les paramètres de classification, et
- le calcul d'une probabilité d'association à partir d'un résultat de la comparaison, où la probabilité d'association est une probabilité avec laquelle il s'agit de l'utilisateur enregistré dans le cas de l'utilisateur actuel,
dans lequel l'adaptation de l'évaluation des données basées sur le comportement détectées de l'utilisateur enregistré au facteur environnemental comprend au moins une des variables suivantes :
dans lequel l'adaptation de l'évaluation des données basées sur le comportement détectées de l'utilisateur enregistré au facteur environnemental comprend au moins une des variables suivantes :
• le cas où les paramètres de classification individuels sont pondérés respectivement avec un facteur de pondération lors du calcul de la probabilité d'association, où les facteurs de pondération sont associés au paramètre de classification respectif et où l'adaptation de l'évaluation des données basées sur le comportement détectées de l'utilisateur enregistré comprend une adaptation des facteurs de pondération moyennant l'emploi d'une correction,
• le cas où l'authentification de l'utilisateur, du fait de la probabilité d'association, comprend une vérification si la probabilité d'association dépasse une probabilité limite, où l'adaptation de l'évaluation des données basées sur le comportement détectées de l'utilisateur enregistré au facteur environnemental comprend une réduction ou une augmentation de la probabilité limite,
• le cas où l'adaptation de l'évaluation des données basées sur le comportement détectées de l'utilisateur enregistré comprend une adaptation des paramètres de comparaison moyennant l'emploi d'une correction.
